# EUROPEAN PATENT APPLICATION

(11) **EP 3 955 681 A1**
(43) Date of publication of application: **16.02.2022**
(21) Application number: 20787261.5
(22) Date of filing: 09.04.2020
(51) Int. Cl.: H04W 72/12, H04W 88/02

(54) **USER TERMINAL AND WIRELESS COMMUNICATION METHOD**

(30) Priority: 11.04.2019 JP 2019087882
(71) Applicant: NTT DOCOMO, INC., Chiyoda-Ku Tokyo 100-6150 (JP)
(72) Inventor: MATSUMURA, Yuki, Tokyo 1006150 (JP); NAGATA, Satoshi, Tokyo 1006150 (JP)
(74) Representative: Hoffmann Eitle
(86) International application number: PCT/JP2020/015997
(87) International publication number: WO 2020/209341

(57) **Abstract**

A user terminal includes: a control section configured to determine a spatial relation, in a case where spatial relation information indicating the spatial relation of specific uplink transmission is not configured or in a case where a specific parameter is configured by the spatial relation information, on the basis of whether or not a time offset between reception of a first downlink control channel and reception of a downlink channel scheduled by the first downlink control channel is equal to or greater than a threshold; and a transmission section configured to perform the specific uplink transmission using the spatial relation.

## Description

### Technical Field

The present disclosure relates to user terminal and a radio communication method in a next-generation mobile communication system.

### Background Art

In a universal mobile telecommunications system (UMTS) network, specifications of long term evolution (LTE) have been drafted for the purpose of further increasing a data rate, providing low latency, and the like (see Non Patent Literature 1). Further, the specifications of LTE-Advanced (third generation partnership project (3GPP) Release. (Rel.) 10 to 14) have been drafted for the purpose of further increasing capacity and advancement of LTE (3GPP Rel. 8 and 9).

Successor systems to LTE (for example, also referred to as 5th generation mobile communication system (5G), 5G+ (plus), New Radio (NR), or 3GPP Rel. 15 or later) are also being studied.

In an existing LTE system (e.g., LTE Rel. 8 to 14), user terminal (user equipment(UE)) controls transmission of an uplink shared channel (physical uplink shared channel (PUSCH)) based on downlink control information (DCI).

### Citation List

### Non Patent Literature

Non Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)", April, 2010

### Summary of Invention

### Technical Problem

In a future radio communication system (for example, NR), it has been studied to designate one of a plurality of candidates configured by higher layer signaling for a beam (spatial relation) of uplink (UL) transmission such as a PUCCH, a PUSCH, and an SRS by a medium access control (MAC) control element (CE), downlink control information (DCI), or the like.

However, the number of candidates that can be configured is limited. Because many candidates are used, in a case where reconfiguration is performed by higher layer signaling, delay, resource consumption, or the like can occur.

Therefore, an object of the present disclosure is to provide user terminal and a radio communication method for appropriately performing control of a UL beam.

### Solution to Problem

a user terminal according to one aspect of the present disclosure includes: a control section configured to determine a spatial relation, in a case where spatial relation information indicating the spatial relation of specific uplink transmission is not configured or in a case where a specific parameter is configured by the spatial relation information, on the basis of whether or not a time offset between reception of a first downlink control channel and reception of a downlink channel scheduled by the first downlink control channel is equal to or greater than a threshold; and a transmission section configured to perform the specific uplink transmission using the spatial relation.

### Advantageous Effects of Invention

According to one aspect of the present disclosure, the UL beam can be appropriately controlled.

### Brief Description of Drawings

Fig. 1 is a diagram illustrating an example of beam correspondence.
Fig. 2 is a diagram illustrating an example of a spatial relation of specific UL transmission.

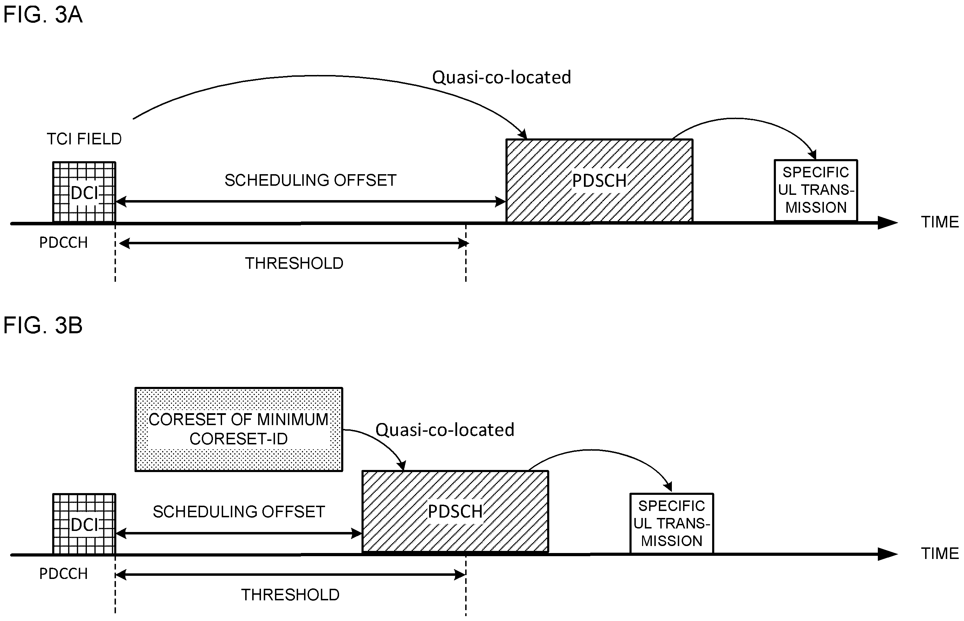

Figs. 3A and 3B are diagrams illustrating examples of a QCL assumption of a PDSCH.
Fig. 4 is a diagram illustrating an example of a schematic configuration of a radio communication system according to one embodiment.
Fig. 5 is a diagram illustrating an example of a configuration of a base station according to one embodiment.
Fig. 6 is a diagram illustrating an example of a configuration of user terminal according to one embodiment.
Fig. 7 is a diagram illustrating an example of a hardware configuration of a base station and user terminal according to one embodiment.

### Description of Embodiments

### (TCI, Spatial Relation, and QCL)

In NR, it has been studied to control reception processing (e.g., at least one of reception, demapping, demodulation, and decoding) and transmission processing (e.g., at least one of transmission, mapping, precoding, modulation, and coding) in UE of at least one of a signal and a channel (expressed as a signal/channel) based on a transmission configuration indication state (TCI state).

The TCI state may represent what is applied to a downlink signal/channel. One corresponding to the TCI state applied to an uplink signal/channel may be expressed as a spatial relation.

The TCI state is information regarding a quasi-co-location (QCL) of the signal/channel, and may also be referred to as, for example, a spatial Rx parameter, spatial relation information (SRI), or the like. The TCI state may be configured in the UE for each channel or each signal.

The QCL is an indicator indicating a statistical property of a signal/channel. For example, a case where one signal/channel and another signal/channel have a QCL relation may mean that it is possible to assume that at least one of Doppler shift, Doppler spread, an average delay, a delay spread, or a spatial parameter (e.g., a spatial Rx parameter) is identical (in QCL with respect to at least one of these) between the plurality of different signals/channels.

Note that the spatial Rx parameter may correspond to a reception beam of the UE (e.g., a reception analog beam), and the beam may be specified based on spatial QCL. The QCL (or at least one element of the QCL) in the present disclosure may be replaced with spatial QCL (sQCL).

A plurality of types of QCL (QCL types) may be defined. For example, four QCL types A to D with different parameters (or parameter sets) that can be assumed to be identical may be provided. These parameters are as follows:
- QCL type A: Doppler shift, Doppler spread, average delay, and delay spread;
- QCL type B: Doppler shift and Doppler spread;
- QCL type C: Doppler shift and average delay; and
- QCL type D: spatial Rx parameter.

It may be referred to as a QCL assumption for the UE to assume that a given control resource set (CORESET), channel, or reference signal has a specific QCL (e.g., QCL type D) relation with another CORESET, channel, or reference signal.

The UE may determine at least one of a transmission beam (Tx beam) and a reception beam (Rx beam) of a signal/channel based on a TCI state of the signal/channel or the QCL assumption.

The TCI state may be, for example, information about QCL of a target channel (or a reference signal (RS) for the channel) and another signal (e.g., another downlink reference signal (DL-RS). The TCI state may be configured (indicated) by higher layer signaling, physical layer signaling, or a combination thereof.

In the present disclosure, the higher layer signaling may be any of, for example, radio resource control (RRC) signaling, medium access control (MAC) signaling, broadcast information, and the like, or a combination thereof.

The MAC signaling may use, for example, a MAC control element (MAC CE), a MAC protocol data unit (PDU), and the like. The broadcast information may be, for example, a master information block (MIB), a system information block (SIB), remaining minimum system information (RMSI), other system information (OSI), and the like.

The physical layer signaling may be, for example, downlink control information (DCI).

A channel for which a TCI state is configured (designated) may be, for example, at least one of a downlink shared channel (physical downlink shared channel (PDSCH)), a downlink control channel (physical downlink control channel (PDCCH)), an uplink shared channel (physical uplink shared channel (PUSCH)), and an uplink control channel (physical uplink control channel (PUCCH)).

Further, RS (DL-RS) that has a QCL relation with the channel may be, for example, at least one of a synchronization signal block (SSB), a channel state information reference signal (CSI-RS), and a measurement reference signal (sounding reference signal (SRS)). Alternatively, the DL-RS may be a CSI-RS (also referred to as a tracking reference signal (TRS)) used for tracking or a reference signal (also referred to as a QRS) used for QCL detection.

The SSB is a signal block including at least one of a primary synchronization signal (PSS), a secondary synchronization signal (SSS), and a broadcast channel (physical broadcast channel (PBCH)). The SSB may be referred to as an SS/PBCH block.

An information element in a TCI state configured by higher layer signaling ("TCI-state IE" of RRC) may include one or more pieces of QCL information ("QCL-Info"). The QCL information may include at least one of information about DL-RS having a QCL relation (DL-RS-related information) and information indicating a QCL type (QCL type information). The DL-RS-related information may include information such as an index of the DL-RS (e.g., an SSB index or a non-zero power (NZP) CSI-RS resource identifier (ID)), an index of a cell where the RS is located, or an index of a bandwidth part (BWP) where the RS is located.

### <TCI state for PDCCH>

Information regarding QCL between PDCCH (or a demodulation reference signal (DMRS) antenna port related to the PDCCH) and a given DL-RS may be referred to as a TCI state for the PDCCH.

The UE may determine a TCI state for UE-specific PDCCH (CORESET) based on higher layer signaling. In one example, for the UE, one or a plurality of (K) TCI states can be configured for each CORESET by RRC signaling.

The UE may cause one of the plurality of TCI states configured by RRC signaling to be activated by the MAC CE for each CORESET. The MAC CE may be referred to as a TCI state indication for UE-specific PDCCH MAC CE. The UE may monitor CORESET based on an active TCI state corresponding to the CORESET.

### <TCI state for PDSCH>

Information regarding QCL between a PDSCH (or a DMRS antenna port associated with the PDSCH) and a given DL-RS may be referred to as a TCI state for the PDSCH.

The UE may be notified (configured) of M (M ≥ 1) TCI states for PDSCHs (QCL information for M PDSCHs) by higher layer signaling. Note that the number M of TCI states configured for the UE may be limited by at least one of UE capability and a QCL type.

The DCI used for scheduling of the PDSCH may include a given field (which may be referred to as, for example, a TCI field, a TCI state field, or the like) indicating the TCI state for the PDSCH. The DCI may be used for scheduling the PDSCH of one cell, and may be referred to as, for example, DL DCI, DL assignment, DCI format 1_0, or DCI format 1_1.

Whether or not the TCI field is included in the DCI may be controlled by information provided from a base station to the UE. The information may be information (for example, TCI presence information, TCI presence information in DCI, higher layer parameter TCI-PresentInDCI) indicating whether the TCI field is present or absent in the DCI. The information may be configured in the UE by, for example, higher layer signaling.

When more than eight types of TCI states are configured for the UE, MAC CE may be used to activate (or designate) eight or less TCI states. The MAC CE may be referred to as a TCI states activation/deactivation for UE-specific PDSCH MAC CE. A value of the TCI field in the DCI may indicate one of the TCI states activated by MAC CE.

When the UE is configured with the TCI presence information set to "enabled" for the CORESET for scheduling the PDSCH (CORESET used for PDCCH transmission for scheduling PDSCH), the UE may assume that the TCI field is present in DCI format 1_1 of the PDCCH transmitted on the

### CORESET.

In a case where the TCI presence information is not configured for the CORESET for scheduling the PDSCH or the PDSCH is scheduled by DCI format 1_0, when the time offset between the reception of the DL DCI (the DCI for scheduling the PDSCH) and the reception of the PDSCH corresponding to the DCI is equal to or greater than the threshold, the UE may assume that the TCI state or the QCL assumption for the PDSCH is the same as the TCI state or the QCL assumption applied to the CORESET used for the PDCCH transmission for scheduling the PDSCH in order to determine the QCL of the PDSCH antenna port.

When the TCI presence information is set to "enabled", the TCI field in the DCI in the component carrier (CC) for scheduling (the PDSCH) indicates the activated TCI state in the scheduled CC or DL BWP, and when the PDSCH is scheduled by DCI format 1_1, the UE may use the TCI with the DCI and according to the value of the TCI field in the detected PDCCH in order to determine the QCL of the PDSCH antenna port. When the time offset between the reception of the DL DCI (scheduling the PDSCH) and the PDSCH corresponding to the DCI (PDSCH scheduled by the DCI) is equal to or greater than the threshold, the UE may assume that the DM-RS port of the PDSCH of the serving cell is QCL with the RS in the TCI state with respect to the QCL type parameter given by the indicated TCI state.

When the UE is configured with a single-slot PDSCH, the indicated TCI state may be based on the activated TCI state in the slot with the scheduled PDSCH. When the UE is configured with a multi-slot PDSCH, the indicated TCI state may be based on the activated TCI state in the first slot with the scheduled PDSCH and the UE may expect identicalness across the slots with the scheduled PDSCH. When the UE is configured with a CORESET associated with a search space set for cross-carrier scheduling, when the TCI presence information is set to "enabled" for the CORESET for the UE and at least one of the TCI states configured for the serving cell scheduled by a search space set includes QCL type D, the UE may assume that the time offset between the detected PDCCH and the PDSCH corresponding to the PDCCH is equal to or greater than the threshold.

In both a case where the TCI information in the DCI (higher layer parameter TCI-PresentInDCI) is set to "enabled" and a case where the TCI information in the DCI is not configured in the RRC connection mode, when the time offset between reception of DL DCI (DCI for scheduling the PDSCH) and the corresponding PDSCH (PDSCH scheduled by the DCI) is less than the threshold, the UE may assume that the DM-RS port of the PDSCH of the serving cell has a minimum (lowest) CORESET-ID in a newest (latest) slot in which one or more CORESETs in an active BWP of the serving cell are monitored by the UE, and is in QCL with the RS related to a QCL parameter used for QCL indication of the PDCCH of the CORESET associated with a monitored search space.

The time offset between the reception of the DL DCI and the reception of the PDSCH corresponding to the DCI may be referred to as a scheduling offset.

Further, the above-mentioned threshold may be referred to as "threshold", "threshold for offset between a DCI indicating a TCI state and PDSCH scheduled by the DCI", "Threshold-Sched-Offset", "timeDurationForQCL", a schedule offset threshold, a scheduling offset threshold, a QCL time length, or the like.

The scheduling offset threshold may be based on the UE capability, and may be based on, for example, the delay caused by decoding the PDCCH and beam switching. The information of the scheduling offset threshold may be configured from the base station using higher layer signaling, or may be transmitted from the UE to the base station.

For example, the UE may assume that the DMRS ports of the PDSCH are QCL with the DL-RS based on the TCI state activated for the CORESET corresponding to the lowest CORESET-ID. The latest slot may be, for example, a slot that receives the DCI that schedules the PDSCH.

Note that the CORESET-ID may be an ID (ID for identifying CORESET) configured by RRC information element "ControlResourceSet".

### <Spatial relation for PUCCH>

The UE may be configured with a parameter (PUCCH configuration information, PUCCH-Config) used for PUCCH transmission by higher layer signaling (for example, radio resource control (RRC) signaling). The PUCCH configuration information may be configured for each partial band (for example, an uplink bandwidth part (BWP)) in a carrier (also referred to as a cell, a component carrier, and the like).

The PUCCH configuration information may include a list of PUCCH resource set information (for example, PUCCH-ResourceSet) and a list of PUCCH spatial relation information (for example, PUCCH-SpatialRelationInfo).

The PUCCH resource set information may include a list (for example, resourceList) of a PUCCH resource index (ID, e.g., PUCCH-ResourceId).

Further, when the UE does not have dedicated PUCCH resource configuration information (for example, a dedicated PUCCH resource configuration) provided by the PUCCH resource set information in the PUCCH configuration information (before RRC setup), the UE may determine the PUCCH resource set based on a parameter (for example, pucch-ResourceCommon) in the system information (for example, system information block type 1 (SIB1) or remaining minimum system information (RMSI)). The PUCCH resource set may include 16 PUCCH resources.

On the other hand, when the UE has the dedicated PUCCH resource configuration information (UE-dedicated uplink control channel configuration, dedicated PUCCH resource configuration) (after RRC setup), the UE may determine the PUCCH resource set according to the number of UCI information bits.

The UE may determine one PUCCH resource (index) in the PUCCH resource set (for example, a cell-specific or UE-dedicated determined PUCCH resource set) on the basis of at least one of a value of a given field (for example, a PUCCH resource indicator field) in downlink control information (DCI) (for example, DCI format 1_0 or 1_1 used for PDSCH scheduling), the number of CCEs (N_{CCE}) in a control resource set (CORESET) for receiving the PDCCH carrying the DCI, and an index (n_{CCE,0}) of a head (first) CCE of the PDCCH reception.

The PUCCH spatial relation information (for example, the RRC information element "PUCCH-spatialRelationInfo") may indicate a plurality of candidate beams (spatial domain filters) for PUCCH transmission. The PUCCH spatial relation information may indicate a spatial relationship between a reference signal (RS) and a PUCCH.

The list of PUCCH spatial relation information may include several elements (PUCCH spatial relation information IE (information element)). Each piece of the PUCCH spatial relation information may include, for example, at least one of an index (ID, e.g. pucch-SpatialRelationInfoId) of the PUCCH spatial relation information, an index (ID, e.g., servingCellId) of the serving cell, and information related to the RS (reference RS) that has a spatial relation with the PUCCH.

For example, the information regarding the RS may be the SSB index, the CSI-RS index (for example, NZP-CSI-RS resource configuration ID), or the SRS resource ID and the ID of the BWP. The SSB index, the CSI-RS index, and the SRS resource ID may be associated with at least one of a beam, a resource, and a port selected by measurement of a corresponding RS.

The UE may be indicated, by a medium access control (MAC) control element (CE), with one of the one or more pieces of PUCCH spatial relation information (for example, PUCCH-SpatialRelationInfo or a candidate beam) in the list of the PUCCH spatial relation information. The MAC CE may be a MAC CE that activates or deactivates the PUCCH spatial relation information (PUCCH spatial relation information activation/deactivation MAC CE, PUCCH spatial relation information indication MAC CE).

After 3 ms from transmission of an acknowledgment (ACK) for the MAC CE activating the given PUCCH spatial relation information, the UE may activate the PUCCH relation information indicated by the MAC CE.

The UE may control the transmission of the PUCCH based on the PUCCH spatial relation information activated by the MAC CE. Note that when a single piece of PUCCH spatial relation information is included in the list of the PUCCH spatial relation information, the UE may control the transmission of the PUCCH on the basis of the PUCCH spatial relation information.

### <Spatial relation for SRS and PUSCH>

The UE may receive information (SRS configuration information, for example, a parameter in the RRC control element "SRS-Config") used for transmission of a measurement reference signal (for example, a sounding reference signal (SRS)).

Specifically, the UE may receive at least one of information related to one or a plurality of SRS resource sets (SRS resource set information, for example, the RRC control element "SRS-ResourceSet") and information related to one or a plurality of SRS resources (SRS resource information, for example, the RRC control element "SRS-Resource").

One SRS resource set may be associated with a given number of SRS resources (a given number of SRS resources may be grouped). Each SRS resource may be specified by an SRS resource identifier (SRS resource indicator (SRI)) or an SRS resource identifier (ID).

The SRS resource set information may include information of an SRS resource set ID (SRS-ResourceSetId), a list of SRS resource IDs (SRS-ResourceId) used in the resource set, an SRS resource type (for example, one of periodic SRS, semi-persistent SRS, and aperiodic CSI (aperiodic SRS)), and SRS usage.

Here, the SRS resource type may indicate any one of a periodic SRS (P-SRS), a semi-persistent SRS (SP-SRS), and an aperiodic CSI (A-SRS). Note that the UE may transmit a P-SRS and an SP-SRS periodically (or periodically after activated), and transmit an A-SRS based on an SRS request in the DCI.

Further, the usage (the RRC parameter "usage" or the Layer-1 (L1) parameter "SRS-SetUse") may be, for example, beam management, codebook (CB), noncodebook (NCB), antenna switching, or the like. An SRS used for codebook or noncodebook may be used to determine a precoder for codebook-based or noncodebook-based PUSCH transmission based on an SRI.

For example, in the case of codebook-based transmission, the UE may determine the precoder for PUSCH transmission based on SRI, transmitted rank indicator (TRI) and transmitted precoding matrix indicator (TPMI). For the noncodebook-based transmission, the UE may determine a precoder for PUSCH transmission based on the SRI.

The SRS resource information may include an SRS resource ID (SRS-ResourceId), the number of SRS ports, an SRS port number, transmission Comb, SRS resource mapping (e.g., time and/or frequency resource position, resource offset, resource periodicity, the number of repetitions, the number of SRS symbols, and SRS bandwidth), hopping related information, an SRS resource type, a sequence ID, and SRS spatial relation information.

The SRS spatial relation information (for example, the RRC information element "spatialRelationInfo") may indicate spatial relation information between a given reference signal and the SRS. The given reference signal may be at least one of a synchronization signal/physical broadcast channel (synchronization signal/physical broadcast channel: SS/PBCH) block, a channel state information reference signal (CSI-RS), and an SRS (e.g., another SRS). The SS/PBCH block may be referred to as a synchronization signal block (SSB).

The SRS spatial relation information may include at least one of an SSB index, a CSI-RS resource ID, and an SRS resource ID as an index of the given reference signal.

Note that, in the present disclosure, an SSB index, an SSB resource ID, and an SSB resource indicator (SSBRI) may be replaced with each other. Further, a CSI-RS index, a CSI-RS resource ID, and a CSI-RS resource indicator (CRI) may be replaced with each other. Further, an SRS index, an SRS resource ID and an SRI may be replaced with each other.

The SRS spatial relation information may include a serving cell index and a BWP index (BWP ID) corresponding to the above-described given reference signal.

In NR, the transmission of the uplink signal may be controlled on the basis of the presence or absence of beam correspondence (BC). The BC may be, for example, a capability of a certain node (for example, a base station or UE) to determine a beam (transmission beam, Tx beam) used for signal transmission on the basis of a beam (reception beam, Rx beam) used for signal reception.

Note that BC may be referred to as transmission/reception beam correspondence (Tx/Rx beam correspondence), beam reciprocity, beam calibration, calibrated/non-calibrated, reciprocity calibrated/non-calibrated, a correspondence degree, a matching degree, or the like.

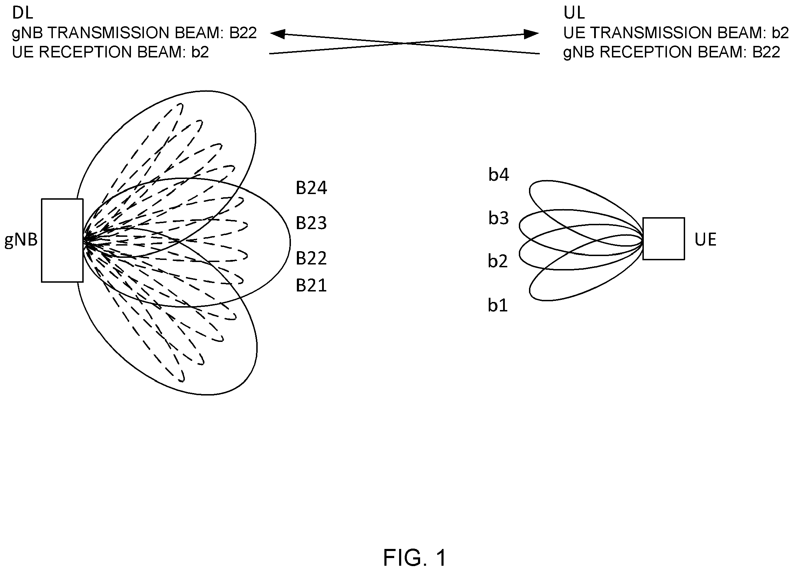

As illustrated in Fig. 1, in BC, a gNB performs transmission beam sweeping by using beams B21 to B24, and the UE performs reception beam sweeping by using beams b1 to b4, so that the gNB and the UE determine the beam B22 of the gNB as a DL transmission beam and determine the beam b2 of the UE as a DL reception beam based on a measurement result. The gNB also uses the determined beam B22 as a UL reception beam and the UE also uses the determined beam b2 as a UL transmission beam.

For example, when there is no BC, the UE may transmit an uplink signal (for example, PUSCH, PUCCH, SRS, and the like) using the same beam (spatial domain transmission filter) as the SRS (or the SRS resource) indicated from the base station based on the measurement results of one or more SRSs (or the SRS resources).

On the other hand, when there is BC, the UE may transmit an uplink signal (for example, PUSCH, PUCCH, SRS, and the like) using a beam (spatial domain transmission filter) identical or corresponding to the beam (spatial domain reception filter) used for reception of a given SSB or CSI-RS (or CSI-RS resource).

When spatial relation information regarding the SSB or CSI-RS and the SRS is configured for a certain SRS resource (for example, when there is BC), the UE may transmit the SRS resource by using the same spatial domain filter (spatial domain transmission filter) as a spatial domain filter (spatial domain reception filter) for receiving the SSB or CSI-RS. In this case, the UE may assume that the UE reception beam of the SSB or CSI-RS is the same as the UE transmission beam of the SRS.

When spatial relation information regarding another SRS (reference SRS) and the SRS (target SRS) is configured for a certain SRS (target SRS) resource (for example, when there is no BC), the UE may transmit the target SRS resource by using the same spatial domain filter (spatial domain transmission filter) as the spatial domain filter (spatial domain transmission filter) for transmitting the reference SRS. That is, in this case, the UE may assume that the UE transmission beam of the reference SRS is the same as the UE transmission beam of the target SRS.

The UE may determine the spatial relation of the PUSCH scheduled by the DCI based on a value of a given field (for example, SRS resource identifier (SRI) field) in the DCI (for example, DCI format 0_1). Specifically, the UE may use the spatial relation information (for example, the RRC information element "spatialRelationInfo") of the SRS resource determined based on the value (for example, SRI) of the given field for the PUSCH transmission.

### <Method for determining spatial relation>

As described above, for the PDCCH or the PDSCH, the UE may be configured with a plurality of TCI states by the RRC and indicated with one of the plurality of TCI states by the MAC CE or the DCI. Therefore, the beam can be quickly switched without performing RRC reconfiguration.

The maximum number of TCI states configurable by the RRC (maxNrofTCI-States) is 128 and the maximum number of TCI states for the PDCCH (maxNrofTCI-StatesPDCCH) is 64.

For the PUCCH, the UE may be configured with eight spatial relations for one PUCCH resource by the RRC and indicated with one spatial relation by the MAC CE. In order to use a spatial relation other than the eight spatial relations configured by the RRC, RRC reconfiguration is required.

When using codebook-based transmission for the PUSCH, the UE may be configured with two SRS resources by the RRC and indicated with one of the two SRS resources by the DCI (1-bit field). When using noncodebook-based transmission for the PUSCH, the UE may be configured with four SRS resources by the RRC and indicated with one of the four SRS resources by the DCI (2-bit field). In order to use a spatial relation other than the two or four spatial relations configured by the RRC, RRC reconfiguration is required.

The DL-RS can be configured for the spatial relation of the SRS resource used for the PUSCH. For the SP-SRS, the UE may be configured with a spatial relation of a plurality of (for example, up to 16) SRS resources by the RRC and indicated with one of the plurality of SRS resources by the MAC CE. For the A-SRS and the P-SRS, the UE cannot be indicated with the spatial relation of the SRS resource by the MAC CE.

As described above, there is a possibility that it is necessary to configure many spatial relation candidates at a time as the spatial relation for the UL transmission (PUCCH, PUSCH, or SRS). For example, in a case where the DL-RS (TCI state of DL) is used as the spatial relation of the UL transmission by beam correspondence, there is a possibility that many DL-RSs (for example, 32 SSBs) are configured.

However, as described above, the number of spatial relation candidates that can be configured at a time for the UL transmission is limited, and is smaller than the number of TCI state candidates that can be configured at a time for the DL channel. In order to use a spatial relation that is not configured for the UL transmission, it is conceivable to configure another spatial relation by RRC reconfiguration. When the RRC reconfiguration is performed, there is a possibility that an uncommunicable time occurs, resources are consumed, and the performance of the system deteriorates.

Therefore, the present inventors have conceived that the UE assumes that the spatial relation of specific uplink transmission is the same as a transmission control indication (TCI) state or quasi-co-location (QCL) assumption of a specific downlink channel.

### <RS of QCL type A and RS of QCL type D in TCI state>

In Rel. 15, both RS of QCL type A and RS of QCL type D, or only the RS of QCL type A is configured as a TCI state of at least one of the PDCCH and the PDSCH.

When a TRS is configured as the RS of QCL type A, the TRS is different from DMRS of the PDCCH or the PDSCH, and it is assumed that the same TRS is periodically transmitted for a long time. The UE may measure the TRS and calculate an average delay, a delay spread, and the like. The UE for which the TRS is configured as the RS of QCL type A in the TCI state of the DMRS of the PDCCH or the PDSCH can assume that parameters (an average delay, a delay spread, and the like) of QCL type A of the TRS are the same as the DMRS of the PDCCH or the PDSCH, and thus, can obtain the parameters (an average delay, a delay spread, and the like) of type A of the DMRS of the PDCCH or the PDSCH from the measurement result of the TRS. When performing channel estimation of at least one of the PDCCH and the PDSCH, the UE can perform channel estimation with higher accuracy using the measurement result of the TRS.

The UE for which an RS of QCL type D has been configured can determine a UE reception beam (spatial domain reception filter, UE spatial domain reception filter) using the RS of QCL type D and determine a monitoring occasion (type 0-PDCCH monitoring occasion) of search space 0 (search space zero) of CORESET 0 (CORESET zero) .

The TCI state of at least one of the PDCCH and the PDSCH may indicate the RS and the serving cell of the UE for which the RS is configured. Only when the QCL type has been set to type C or type D, the RS may be located in the serving cell other than a cell in which the TCI state has been configured. Therefore, in carrier aggregation (CA), the RS of QCL type A configured as a TCI state of a secondary cell (SCell) may be the TRS of the SCell. The TRS of the SCell may be transmitted to configure the RS of QCL type A of the TCI state of at least one of the PDCCH and the PDSCH of the SCell for the UE.

For the DMRS of the PDCCH, the UE may expect that the TCI state indicates any one of the QCL types described below.
- QCL type A having a CSI-RS resource in an NZP-CSI-RS resource set in which a higher layer parameter trs-Info (TRS information) is configured, and QCL type D having the same CSI-RS resource if available
- QCL type A having a CSI-RS resource in an NZP-CSI-RS resource set in which a higher layer parameter trs-Info is configured, and QCL type D having a CSI-RS resource in an NZP-CSI-RS resource set in which higher layer parameter repetition (repetition) is configured if available
- QCL type A having a CSI-RS resource in an NZP-CSI-RS resource set in which neither a higher layer parameter trs-Info nor a higher layer parameter repetition is configured, and QCL type D having the same CSI-RS resource if available

The trs-Info configured in the NZP-CSI-RS resource set may indicate that antenna ports for all NZP-CSI-RS resources in the NZP-CSI-RS resource set are the same. When repetition is configured in the NZP-CSI-RS resource set, the NZP-CSI-RS resource in the NZP-CSI-RS resource set may be transmitted using the same DL spatial domain transmission filter (base station spatial domain transmission filter, base station transmission beam) and the same number of ports in all symbols.

The TCI state for the DMRS of the PDSCH is similar to the TCI state for the DMRS of the PDCCH.

When the TCI state of the SCell indicates the RS of QCL type A and the RS of QCL type D, one of Combinations 1 and 2 described below may be indicated.
- Combination 1: The RS of QCL type A, which is the TRS of the serving cell (for example, SCell) in which the TCI state is configured, and the RS of QCL type D, which is the CSI-RS of another serving cell (for example, primary cell (PCell)) in which repetition is configured
- Combination 2: The RS of QCL type A, which is the TRS of the serving cell (for example, SCell) for which the TCI state is configured, and the RS of QCL type D, which is the same TRS as the RS of QCL type A

When the TCI state of the SCell indicates Combination 1, the RS of QCL type A and the RS of QCL type D in the TCI state are different from each other. When the UE determines the spatial relation based on the TCI state, it is not clear based on which: the RS of QCL type A and the RS of QCL type D the UE determines the spatial relation.

Therefore, the present inventors have conceived that it is assumed that the RS of the spatial relation of specific uplink transmission is the same as the RS of QCL type D in a transmission control indication (TCI) state or quasi-co-location (QCL) assumption of a specific downlink channel.

Hereinafter, embodiments according to the present disclosure will be described in detail with reference to the drawings. Radio communication methods according to the respective embodiments may be applied independently, or may be applied in combination.

In the present disclosure, the specific UL transmission may be read as a specific UL signal or a specific UL channel, or may be read as at least one of the PUSCH, the PUCCH, and the SRS. A specific DL channel may be read as at least one of the PDCCH and the PDSCH. The spatial relation may be read as spatial relation information, spatial relation assumption, a spatial domain transmission filter, a UE spatial domain transmission filter, a spatial domain filter, a UE transmission beam, a UL transmission beam, a DL-RS, or the like.

The TCI state may be read as a TCI state or a QCL assumption, a QCL assumption, a spatial domain reception filter, a UE spatial domain reception filter, a spatial domain filter, a UE reception beam, a DL reception beam, a DL-RS, or the like. The RS of QCL type D, the DL-RS associated with QCL type D, the DL-RS with QCL type D, a source of the DL-RS, the SSB, and the CSI-RS may be replaced with each other.

In the present disclosure, the TCI state may be information (e.g., a DL-RS, a QCL type, a cell in which a DL-RS is transmitted, or the like) regarding a reception beam (spatial domain reception filter) indicated (configured) for the UE. The QCL assumption is based on transmission or reception of an associated signal (e.g., PRACH), and may be information (e.g., a DL-RS, a QCL type, a cell in which a DL-RS is transmitted, or the like) regarding a reception beam (spatial domain reception filter) assumed by the UE.

In the present disclosure, the spatial relation of the specific UL transmission, the spatial relation of the SRS configuration information, the PUCCH spatial relation information, the spatial relation of the PUSCH, the spatial relation information of the specific UL transmission, and the RS of the spatial relation of the specific UL transmission may be replaced with each other.

In the present disclosure, the PCell, the primary secondary cell (PSCell), and the special cell (SpCell) may be replaced with each other.

In the present disclosure, x or more and more than x may be replaced with each other. In the present disclosure, less than x and x or less may be replaced with each other.

### (Radio Communication Method)

### <Embodiment 1>

The UE may assume (may consider) that the spatial relation of the specific UL transmission is the same as the TCI state or QCL assumption of the specific DL channel.

The spatial relation of the specific UL transmission and the RS of the spatial relation of the specific UL transmission may be replaced with each other.

The TCI state or the QCL assumption of the specific DL channel, the RS related to the QCL parameter (QCL parameter) given by the TCI state or the QCL assumption of the specific DL channel, and the RS of QCL type D in the TCI state or the QCL assumption of the specific DL channel may be replaced with each other.

The fact that the spatial relation of the specific UL transmission is the same as the TCI state or the QCL assumption of the specific DL channel, the fact that the RS of the spatial relation of the specific UL transmission is the same as the RS related to the QCL parameter (QCL parameter) given by the TCI state or the QCL assumption of the specific DL channel, and the fact that the RS of the spatial relation of the specific UL transmission is the same as the RS of QCL type D in the TCI state or the QCL assumption of the specific DL channel may be replaced with each other.

As the RS of the spatial relation of the specific UL transmission for determining the UL transmission beam (spatial domain transmission filter), it is preferable to use the RS of QCL type D in the TCI state or QCL assumption of the specific DL channel for determining the UE reception beam (spatial domain reception filter). In particular, when the TCI state or the QCL assumption of the specific DL channel has both the RS of QCL type A and the RS of QCL type D and the RS of QCL type A and the RS of QCL type D are different from each other, it is preferable to use the RS of QCL type D in the TCI state or the QCL assumption of the specific DL channel as the RS of the spatial relation of the specific UL transmission.

For example, as described above, when the TCI state indicates the RS of QCL type A, which is the TRS of the serving cell (for example, SCell) in which the TCI state is configured and the RS of QCL type D, which is the CSI-RS of another serving cell (for example, PCell) in which repetition is configured, the RS of QCL type A and the RS of QCL type D are different from each other. Since it is conceivable that the parameter of QCL type A varies depending on the cell, the RS of QCL type A is preferably transmitted in the cell in which the TCI state is configured. On the other hand, the RS of QCL type D may be transmitted in a serving cell other than the cell in which the TCI state is configured. Note that the serving cell in which the TCI state is configured may be the PCell, and the serving cell in which the RS of QCL type D is transmitted may be the SCell.

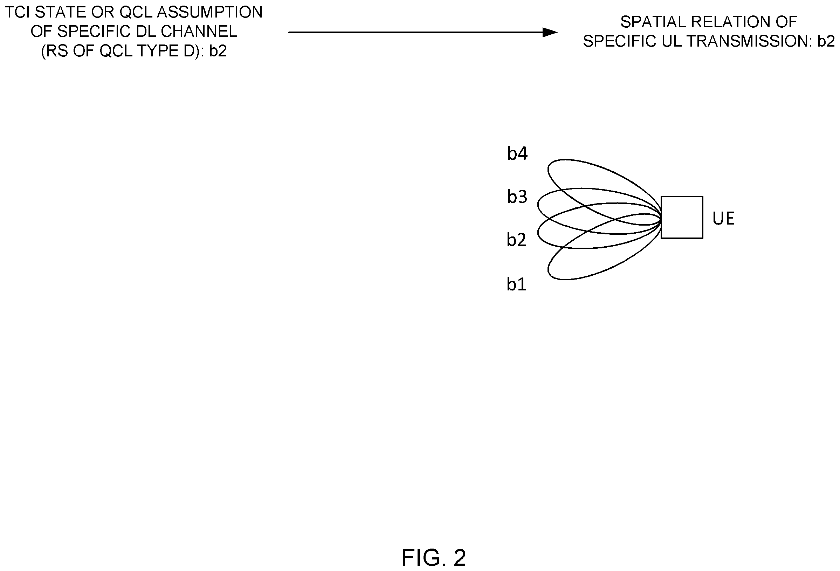

As illustrated in Fig. 2, the UE may use the RS of QCL type D in the TCI state (for example, DL-RS, spatial domain reception filter, spatial domain filter, UE reception beam) of the specific DL channel as the RS of the spatial relation (for example, DL-RS, spatial domain transmission filter, spatial domain filter, UE transmission beam) of the specific UL transmission.

The UE may assume that the RS of the spatial relation of the specific UL transmission is the same as the RS of QCL type D in the TCI state of the specific DL channel when the spatial relation (for example, spatialRelationInfo and PUCCH-SpatialRelationInfo) of the specific UL transmission is not configured or when a specific parameter is configured by a specific higher layer parameter.

In frequency range 1 (FR1, a frequency of 6 GHz or less), the UE may not use analog beam forming for UL transmission, or may not be configured with a spatial relation for UL transmission.

In frequency range 2 (FR2, a frequency higher than 6 GHz (or a frequency higher than 24 GHz)), the UE may assume that the RS of the spatial relation of the specific UL transmission is the same as the RS of QCL type D in the TCI state of the specific DL channel. In FR2, when the spatial relation of the specific UL transmission is not configured, the UE may assume that the RS of the spatial relation of the specific UL transmission is the same as the RS of QCL type D in the TCI state of the specific DL channel.

When the RS of QCL type D in the TCI state of the specific DL channel can be applied, the UE may assume that the RS of the spatial relation of the specific UL transmission is the same as the RS of QCL type D in the TCI state of the specific DL channel. When the RS of QCL type D in the TCI state of the specific DL channel can be applied and the spatial relation of the specific UL transmission is not configured, the UE may assume that the spatial relation of the specific UL transmission is the same as the TCI state of the specific DL channel.

In FR2, when the RS of QCL type D in the TCI state of the specific DL channel can be applied, the UE may assume that the RS of the spatial relation of the specific UL transmission is the same as the RS of QCL type D in the TCI state of the specific DL channel. In FR2, when the RS of QCL type D in the TCI state of the specific DL channel can be applied and the spatial relation of the specific UL transmission is not configured, the UE may assume that the RS of the spatial relation of the specific UL transmission is the same as the RS of QCL type D in the TCI state of the specific DL channel.

When a given function after Rel. 16 is configured, the UE may assume that the RS of the spatial relation of the specific UL transmission is the same as the RS of QCL type D in the TCI state of the specific DL channel. When a given function is configured and the spatial relation of the specific UL transmission is not configured, the UE may assume that the RS of the spatial relation of the specific UL transmission is the same as the RS of QCL type D in the TCI state of the specific DL channel.

The given function may be a beam-related function after Rel. 16. The given function may be configured in the UE by higher layer signaling. The beam-related function may be at least one of low latency beam selection, Layer 1 (L1)-signal to interference plus noise ratio (SINR) beam reporting (L1-SINR beam reporting), BFR on a secondary cell (SCell) (BFR on SCell). The low latency beam selection may be referred to as fast beam selection, beam selection w/o TCI state, beam selection type II, TCI state indication type 2, or the like. The L1-SINR beam reporting may be that the UE reports a measurement result (CSI, L1-SINR corresponding to beam) of the L1-SINR for beam management. The BFR on SCell may be at least one of detecting a beam failure (BF) in the SCell, transmitting a beam failure recovery request (BFRQ) to the SCell, and receiving a beam failure recovery (BFR) response from the SCell.

The UE may report specific UE capability information. The specific UE capability information may indicate supporting the assumption that the RS of the spatial relation of the specific UL transmission is the same as the RS of QCL type D in the TCI state of the specific DL channel, or may indicate supporting the given function. The specific UE capability information may be default spatial relation information. When the specific UE capability information is reported, the UE may assume that the RS of the spatial relation of the specific UL transmission is the same as the RS of QCL type D in the TCI state of the specific DL channel. When the specific UE capability information is reported and the spatial relation of the specific UL transmission is not configured, the UE may assume that the RS of the spatial relation of the specific UL transmission is the same as the RS of QCL type D in the TCI state of the specific DL channel. When the specific UE capability information is not reported, the UE may assume that the spatial relation of the specific UL transmission is configured.

The TCI state of the specific DL channel may be read as an active TCI state (activated TCI state), an active TCI state or QCL assumption, or the like.

A plurality of TCI states may be active with respect to the specific DL channel. In this case, the TCI state or the QCL assumption of the specific DL channel used for the spatial relation of the specific UL transmission may be the default TCI state (default RS, default TCI state or QCL assumption).

The default TCI state may be read as the RS related to a QCL parameter used for QCL indication of the PDCCH of the CORESET associated with the monitored search space having the lowest CORESET-ID in the latest slot in which one or more CORESETs in the active BWP of the serving cell are monitored by the UE, may be read as the TCI state or the QCL assumption of the CORESET having the lowest CORESET-ID in the latest slot and associated with the monitored search space, may be read as the TCI state or the QCL assumption of the CORESET having the lowest CORESET-ID in a specific slot and associated with the monitored search space, may be read as the TCI state or the QCL assumption of a specific CORESET, may be read as the TCI state or the QCL assumption (for example, RS of QCL type D in TCI state or QCL assumption) of the DL channel (alternatively, the DL channel that triggers the specific UL transmission, the DL channel that schedules the specific UL transmission, and the DL channel that schedules the DL channel corresponding to the specific UL transmission) corresponding to the specific UL transmission, or may be read as the RS related to a QCL parameter of the specific DL channel (RS that is QCL with the specific DL channel (for example, RS of QCL type D)).

The specific slot may be the latest slot in the PDSCH reception or the latest slot in the specific UL transmission. The specific CORESET may be a CORESET indicated by higher layer signaling (for example, the spatial relation information of the specific UL transmission).

When the UE is not configured with the spatial relation of the specific UL transmission or when the UE is configured with a specific parameter by a specific higher layer parameter, when the time offset between reception of the DCI (for example, DCI for scheduling specific DL channel) and reception of the specific DL channel is equal to or greater than the threshold, the UE may assume that the spatial relation of the specific UL transmission (for example, RS of the spatial relation) is the same as the TCI state or QCL assumption (for example, RS of QCL type D in TCI state or QCL assumption) applied to the CORESET used for PDCCH transmission scheduling the specific DL channel.

When the UE is not configured with the spatial relation of the specific UL transmission or when the UE is configured with a specific parameter by a specific higher layer parameter, when the time offset between reception of the DCI (for example, DCI for scheduling specific DL channel) and reception of the specific DL channel is less than the threshold, the UE may assume that the spatial relation of the specific UL transmission (for example, RS of the spatial relation) is QCL with the default TCI state.

When the specific UL transmission is the PUCCH, the specific DL channel may be a PDCCH (PDCCH for scheduling a PDSCH corresponding to HARQ-ACK carried by the PUCCH) corresponding to the PUCCH or a PDSCH corresponding to HARQ-ACK carried by the PUCCH. When the specific UL transmission is the PUSCH, the specific DL channel may be a PDCCH that schedules the PUSCH, a PDCCH that schedules the PDSCH corresponding to HARQ-ACK carried by the PUSCH, or a PDSCH corresponding to HARQ-ACK carried by the PUSCH. When the specific UL transmission is the A-SRS, the specific DL channel may be a PDCCH that triggers the A-SRS. When the specific UL transmission is the UL transmission triggered by the MAC CE, such as the SP-SRS, the specific DL channel may be a PDCCH that schedules the MAC CE, or may be a PDSCH that carries the MAC CE.

For example, when the specific UL transmission is a PUCCH (or PUSCH) carrying HARQ-ACK, the specific DL channel may be a PDCCH (PDCCH for scheduling a PDSCH corresponding to the HARQ-ACK) indicating a resource of the PUCCH, or may be a PDSCH (used to generate the HARQ-ACK) corresponding to the HARQ-ACK.

When the TCI presence information (for example, higher layer parameter TCI-PresentInDCI) is not configured for the CORESET for scheduling the PDSCH or when the PDSCH is scheduled by the DCI format 1_0, when the time offset between reception of the DL DCI (for example, DCI for scheduling the PDSCH) and reception of the PDSCH corresponding to the DCI is equal to or greater than the threshold, the UE may assume that the spatial relation (for example, RS of spatial relation) of the PUCCH (or PUSCH) carrying the HARQ-ACK for the PDSCH is the same as the TCI state or the QCL assumption (for example, RS of QCL type D in TCI state or QCL assumption) applied to the CORESET used for the PDCCH transmission for scheduling the PDSCH.

When the TCI presence information is set to "enabled", the TCI field in the DCI in the component carrier (CC) for scheduling (the PDSCH) indicates the activated TCI state in the scheduled CC or DL BWP, and when the PDSCH is scheduled by DCI format 1_1, the UE may use the TCI with the DCI and according to the value of the TCI field in the detected PDCCH to determine the spatial relation of the PUCCH (or PUSCH) carrying HARQ-ACK for the PDSCH. When the time offset between the reception of the DL DCI (scheduling the PDSCH) and the PDSCH corresponding to the DCI is equal to or greater than the threshold, the UE may assume that the spatial relation (for example, RS of spatial relation) of the PUCCH (or PUSCH) carrying the HARQ-ACK for the PDSCH is QCL with the RS (for example, RS of QCL type D) in the TCI state with respect to the QCL type parameter given by the indicated TCI state.

In both a case where the TCI presence information is set to "enabled" and a case where the TCI information in the DCI is not configured in the RRC connection mode, when the time offset between reception of DL DCI (DCI for scheduling the PDSCH) and the corresponding PDSCH (PDSCH scheduled by the DCI) is less than the threshold, the UE may assume that the spatial relation (for example, RS of spatial relation) of the PUCCH (or PUSCH) carrying the HARQ-ACK for the PDSCH is QCL with the RS related to a QCL parameter used for QCL indication of the PDCCH of the CORESET associated with a monitored search space and having the lowest CORESET-ID in a specific slot (for example, latest slot) in which one or more CORESETs in an active BWP of the serving cell are monitored by the UE, or may assume that the spatial relation of the PUCCH (or PUSCH) carrying the HARQ-ACK for the PDSCH is QCL with the RS related to a QCL parameter of the PDSCH (RS (for example, RS of QCL type D) that is QCL with the PDSCH (DM-RS port of the PDSCH, the antenna port of the PDSCH).

The specific slot may be the latest slot in the PDSCH (for example, the PDSCH corresponding to the HARQ-ACK carried by the specific UL transmission) corresponding to the specific UL transmission. In this case, by using the RS related to the QCL parameter associated with the CORESET of the latest slot for the PDSCH for the spatial relation of the specific UL transmission, the UE can make the beam (spatial domain reception filter) of the PDSCH and the beam (spatial domain transmission filter) of the specific UL transmission the same, avoid beam change processing, and suppress the processing load.

The specific slot may be the latest slot in the specific UL transmission. In this case, by using the RS related to the QCL parameter associated with the CORESET of the latest slot for the specific UL transmission for the spatial relation of the specific UL transmission, the UE can make the beam (spatial domain reception filter) of the latest PDCCH and the beam (spatial domain transmission filter) of the specific UL transmission the same, avoid beam change processing, and suppress the processing load.

The specific UL transmission may be at least one of the PUSCH and the SRS. Thus, changes in the specification can be reduced.

The fact that the UE is not configured with the spatial relation of the specific UL transmission or the fact that the specific parameter is configured by the specific higher layer parameter may be paraphrased by at least one of Embodiments 1-1 to 1-5 described below.

### <<Embodiment 1-1>>

If there is no specific field in the specific higher layer parameter (for example, the RRC information element) (information of the specific field is not configured in the specific higher layer parameter), the UE may assume that the RS of the spatial relation of the specific UL transmission is the same as the RS of QCL type D in the TCI state of the specific DL channel.

The specific higher layer parameter may be SRS configuration information (SRS-Config), PUCCH configuration information (PUCCH-Config), or the like.

When there is no specific field in the SRS resource information (SRS-Resource) in the SRS configuration information (SRS-Config), the UE may assume that the RS of the spatial relation of the specific UL transmission is the same as the RS of QCL type D in the active TCI state of the specific DL channel. The specific field may be spatial relation information (spatialRelationInfo) that is a configuration of the spatial relation between a reference RS (reference RS, for example, SSB, CSI-RS, or SRS) and a target SRS.

When it is indicated that the SRS resource set information (SRS-ResourceSet) in the SRS configuration information (SRS-Config) is used for codebook-based transmission or noncodebook-based transmission (the usage in the SRS resource set information indicates a codebook or a noncodebook), and there is no specific field in the SRS resource information (SRS-Resource) indicating the SRS resource in the SRS resource set, the UE may assume that the RS of the spatial relation of the PUSCH is the same as the RS of QCL type D in the active TCI state of the specific DL channel. The specific field may be spatial relation information (spatialRelationInfo).

If there is no specific field in the PUCCH configuration information (PUCCH-Config), the UE may assume that the RS of the spatial relation of the PUCCH is the same as the RS of QCL type D in the active TCI state of the specific DL channel. The specific field may be an element of a list (spatialRelationInfoToAddModList). The element may be PUCCH spatial relation information (PUCCH-SpatialRelationInfo) used to configure a spatial setting for PUCCH transmission.

### <<Embodiment 1-2>>

The specific higher layer parameter (for example, the RRC information element) may indicate a specific parameter. When the specific parameter (when the information regarding the TCI state or QCL assumption is configured) is configured by the specific higher layer parameter (when the specific higher layer parameter indicates the specific parameter and when the specific higher layer parameter includes a field of the specific parameter), the UE may assume that the RS of the spatial relation of the specific UL transmission is the same as the RS of QCL type D in the TCI state of the specific DL channel.

The specific higher layer parameter may be SRS configuration information (SRS-Config), PUCCH configuration information (PUCCH-Config), spatial relation information (for example, spatialRelationInfo, PUCCH-SpatialRelationInfo), reference signal information (referenceSignal) in the spatial relation information, a type in the spatial relation information, or the like. In addition, the specific parameter may be one of options of the reference signal information or type.

The specific parameter may be a parameter (for example, a TCI state) indicating that the TCI state of the specific DL channel is used for the spatial relation of the specific UL transmission, a parameter (for example, default) indicating that the RS of the spatial relation of the specific UL transmission is default, a parameter (for example, CORESET) indicating that the spatial relation of the specific UL transmission is the same as the TCI state of the CORESET, or a parameter (for example, ControlRS) indicating that the RS of the spatial relation of the specific UL transmission is the same as the RS of QCL type D in the TCI state of the specific DL channel.

For example, when a CORESET is configured by the spatial relation information (when the spatial relation information indicates the CORESET, when the spatial relation information includes a field of the CORESET), the UE may assume that the RS of the spatial relation of the specific UL transmission is the same as the RS of QCL type D in the TCI state of the specific DL channel.

When a specific parameter is configured by the SRS resource information (SRS-Resource) in the SRS configuration information (SRS-Config), the UE may assume that the RS of the spatial relation of the specific UL transmission is the same as the RS of QCL type D in the active TCI state of the specific DL channel.

When it is indicated that the SRS resource set information (SRS-ResourceSet) in the SRS configuration information (SRS-Config) is used for codebook-based transmission or noncodebook-based transmission (the usage in the SRS resource set information indicates a codebook or a noncodebook), and a specific parameter is configured by the SRS resource information (SRS-Resource) (or spatial relation information (spatialRelationInfo)) indicating the SRS resource in the SRS resource set, the UE may assume that the RS of the spatial relation of the PUSCH is the same as the RS of QCL type D in the active TCI state of the specific DL channel.

When a specific parameter is configured by the PUCCH configuration information (PUCCH-Config), the UE may assume that the RS of the spatial relation of the PUCCH is the same as the RS of QCL type D in the active TCI state of the specific DL channel. The specific parameter may be in an element of the list (spatialRelationInfoToAddModList). The element may be PUCCH spatial relation information (PUCCH-SpatialRelationInfo) used to configure a spatial setting for PUCCH transmission.

When a CORESET is configured by the PUCCH configuration information (PUCCH-Config), the UE may assume that the RS of the spatial relation of the PUCCH is the same as the RS of QCL type D in the TCI state of the

### CORESET.

### <<Embodiment 1-3>>

When a specific RS is not configured in the specific higher layer parameter (the specific higher layer parameter does not include the specific RS), the UE may assume that the RS of the spatial relation of the specific UL transmission is the same as the RS of QCL type D in the TCI state of the specific DL channel.

The specific higher layer parameter may be SRS configuration information (SRS-Config), spatial relation information (spatialRelationInfo), PUCCH configuration information (PUCCH-Config), PUCCH spatial relation information (PUCCH-SpatialRelationInfo), or the like.

The specific RS may be any of an SRS, an SSB, and a CSI-RS. When the specific RS is not configured in the specific higher layer parameter, none of the SRS, the SSB, and the CSI-RS may be configured in the specific higher layer parameter.

When a specific RS is not configured in the SRS resource information (SRS-Resource) in the SRS configuration information (SRS-Config), the UE may assume that the RS of the spatial relation of the specific UL transmission is the same as the RS of QCL type D in the active TCI state of the specific DL channel. The specific RS may be a RS (referenceSignal) in the spatial relation information (spatialRelationInfo).

When it is indicated that the SRS resource set information (SRS-ResourceSet) in the SRS configuration information (SRS-Config) is used for codebook-based transmission or noncodebook-based transmission (the usage in the SRS resource set information indicates a codebook or a noncodebook), and a specific RS is not configured in the SRS resource information (SRS-Resource) indicating the SRS resource in the SRS resource set, the UE may assume that the RS of the spatial relation of the PUSCH is the same as the RS of QCL type D in the active TCI state of the specific DL channel. The specific RS may be a RS (referenceSignal) in the spatial relation information (spatialRelationInfo).

When a specific RS is not configured in the PUCCH configuration information (PUCCH-Config), the UE may assume that the RS of the spatial relation of the PUCCH is the same as the RS of QCL type D in the active TCI state of the specific DL channel. The specific RS may be an RS (referenceSignal) in the PUCCH spatial relation information (PUCCH-SpatialRelationInfo).

In a case where the PUCCH spatial relation information does not include the specific RS but includes information for PUCCH power control (for example, pucch-PathlossReferenceRS-Id, p0-PUCCH-Id, closedLoopIndex), the UE can perform PUCCH power control on the basis of the PUCCH spatial relation information.

### <<Embodiment 1-4>>

When the specific higher layer parameter is not configured, the UE may assume that the RS of the spatial relation of the specific UL transmission is the same as the RS of QCL type D in the TCI state of the specific DL channel.

The specific higher layer parameter may be a specific RRC information element or a higher layer parameter (for example, spatialRelationInfo, PUCCH-SpatialRelationInfo) of the spatial relation information.

The SRS parameter (a higher layer parameter (spatialRelationInfo) of the spatial relation information that is a configuration of the spatial relation between the reference RS and the target SRS) may be semi-statically configurable by a higher layer parameter (SRS-Resource) of the SRS resource.

In a case where the higher layer parameter spatialRelationInfo is configured, it may include the ID of the reference RS. The reference RS may be an SS/PBCH block, a CSI-RS, or an SRS. When there is a higher layer parameter (servingCellId) of the serving cell ID, the CSI-RS may be configured on the serving cell indicated thereby. The SRS may be configured on the UL BWP indicated by the higher layer parameter (uplinkBWP) of the UL BWP, may be configured on the serving cell indicated by the higher layer parameter (servingCellId) of the serving cell ID when such exists, or may be configured on the same serving cell as the target SRS when such does not exist.

When the higher layer parameter spatialRelationInfo is not configured, the UE may assume that the RS of the spatial relation is the same as the RS of QCL type D in the active TCI state of the specific DL channel.

When the higher layer parameter spatialRelationInfo is not configured, the UE may assume that the RS of the spatial relation is the same as the RS of QCL type D in the active TCI state of the specific DL channel or the RS of QCL type D in the TCI state or QCL assumption of the CORESET having the lowest CORESET-ID in the latest slot and associated with the monitored search space.

### <<Embodiment 1-5>>

When the specific higher layer parameter for a specific type is not configured, the UE may assume that the RS of the spatial relation of the specific UL transmission is the same as the RS of QCL type D in the TCI state of the specific DL channel. The specific type may be at least one of the P-SRS, the SP-SRS, and the A-SRS, or may be specified by a higher layer parameter (resourceType) of the resource type in the SRS resource information.

### <<<P-SRS>>>

A case where the SRS resource information (SRS-Resource) indicates the P-SRS to the UE in which one or more SRS resource configurations are configured (a case where the higher layer parameter (resourceType) of the resource type in the SRS resource information indicates "periodic") will be described.

In a case where the UE is configured with the higher layer parameter spatialRelationInfo including the ID (ssb-Index) of a reference SS/PBCH block, the UE may transmit the target SRS resource having the same spatial domain transmission filter as that used to receive the reference SS/PBCH block. In a case where the UE is configured with the higher layer parameter spatialRelationInfo including the ID (csi-RS-Index) of a reference CSI-RS, the UE may transmit the target SRS resource having the same spatial domain transmission filter as that used to receive a reference periodic CSI-RS or a reference semi-persistent CSI-RS. In a case where the UE is configured with the higher layer parameter spatialRelationInfo including the ID (srs) of a reference SRS, the UE may transmit the target SRS resource having the same spatial domain transmission filter as that used to transmit a reference P-SRS.

When the higher layer parameter spatialRelationInfo is not configured, the UE may assume that the RS of the spatial relation of the specific UL transmission is the same as the RS of QCL type D in the active TCI state of the specific DL channel.

When the higher layer parameter spatialRelationInfo is not configured, the UE may assume that the RS of the spatial relation of the specific UL transmission is the same as the RS of QCL type D in the TCI state or QCL assumption of the CORESET having the lowest CORESET-ID in the latest slot and associated with the monitored search space.

### <<<SP-SRS>>>

A case where the SRS resource information (SRS-Resource) indicates the SP-SRS to the UE in which one or more SRS resource configurations are configured (a case where the higher layer parameter (resourceType) of the resource type in the SRS resource information indicates "semi-persistent") will be described.

When the UE receives an activation command for the SRS resource and when the HARQ-ACK corresponding to the PDSCH carrying a selection command is transmitted in a slot n, the corresponding operation and the UE's assumption on the SRS transmission corresponding to the configured SRS resource set may be applied from a slot n + 3N + 1 (where N is the number of slots in the subframe). The activation command may include a spatial relation assumption provided by a list of references to one reference signal ID per element of the activated SRS resource set. Each ID in the list may refer to a reference SS/PBCH block, NZP CSI-RS resource, or SRS resource. The reference NZP CSI-RS resource may be an NZP CSI-RS resource configured on the serving cell indicated by a resource serving cell ID field if such exists in the activation command, or may be an NZP CSI-RS resource configured on the same serving cell as the SRS resource set if such does not exist. The reference SRS resource may be an SRS resource configured on the serving cell and the UL BWP indicated by a resource serving cell ID and a resource BWP ID if such exist in the activation command, or may be an SRS resource configured on the same serving cell and the BWP as the SRS resource set if such do not exist.

In a case where the UE is configured with the higher layer parameter spatialRelationInfo including the ID (ssb-Index) of a reference SS/PBCH block, the UE may transmit the target SRS resource having the same spatial domain transmission filter as that used to receive the reference SS/PBCH block. In a case where the UE is configured with the higher layer parameter spatialRelationInfo including the ID (csi-RS-Index) of a reference CSI-RS, the UE may transmit the target SRS resource having the same spatial domain transmission filter as that used to receive a reference periodic CSI-RS or a reference semi-persistent CSI-RS. In a case where the UE is configured with the higher layer parameter spatialRelationInfo including the ID (srs) of a reference SRS, the UE may transmit the target SRS resource having the same spatial domain transmission filter as that used to transmit a reference SP-SRS or a reference SP-SRS.

When no higher layer parameter spatialRelationInfo is configured or when no higher layer parameter spatialRelationInfo is activated, the UE may assume that the RS of the spatial relation of the specific UL transmission is the same as the RS of QCL type D in the active TCI state of the specific DL channel.

When no higher layer parameter spatialRelationInfo is configured or no higher layer parameter spatialRelationInfo is activated, the UE may assume that the RS of the spatial relation of the specific UL transmission is the same as the RS of QCL type D in the TCI state or QCL assumption of the CORESET having the lowest CORESET-ID in the latest slot and associated with the monitored search space.

### <<<A-SRS>>>

A case where the SRS resource information (SRS-Resource) indicates the A-SRS to the UE in which one or more SRS resource configurations are configured (a case where the higher layer parameter (resourceType) of the resource type in the SRS resource information indicates "aperiodic") will be described.

In a case where the UE is configured with the higher layer parameter spatialRelationInfo including the ID (ssb-Index) of a reference SS/PBCH block, the UE may transmit the target SRS resource having the same spatial domain transmission filter as that used to receive the reference SS/PBCH block. In a case where the UE is configured with the higher layer parameter spatialRelationInfo including the ID (csi-RS-Index) of a reference CSI-RS, the UE may transmit the target SRS resource having the same spatial domain transmission filter as that used to receive a reference periodic CSI-RS, a reference semi-persistent SP-CSI-RS, or the latest reference aperiodic CSI-RS. In a case where the UE is configured with the higher layer parameter spatialRelationInfo including the ID (srs) of a reference SRS, the UE may transmit the target SRS resource having the same spatial domain transmission filter as that used to transmit a reference P-SRS, a reference SP-SRS, or a reference A-SRS.

When the higher layer parameter spatialRelationInfo is not configured, the UE may assume that the RS of the spatial relation of the specific UL transmission is the same as the RS of QCL type D in the active TCI state of the specific DL channel.

When the higher layer parameter spatialRelationInfo is not configured, the UE may assume that the RS of the spatial relation of the specific UL transmission is the same as the RS of QCL type D in the TCI state or QCL assumption of the CORESET having the lowest CORESET-ID in the latest slot and associated with the monitored search space.

When the higher layer parameter spatialRelationInfo is not configured, the UE may assume that the RS of the spatial relation of the specific UL transmission is the same as the RS of QCL type D in the TCI state or QCL assumption of the PDCCH that triggers the A-SRS.

According to Embodiment 1 described above, when the active TCI state of the specific DL channel is updated by the MAC CE or the DCI, the spatial relation of the specific UL transmission can be updated. Since there is no need to perform RRC reconfiguration and the spatial relation of the specific UL transmission can be quickly controlled, the communication characteristics of the specific UL transmission can be enhanced. In addition, since the base station does not require configuration and activation of the spatial relation information, signaling overheads for the spatial relation and communication interruption can be avoided.

In the UE capability information, it has been studied that the maximum number of the sum of active spatial relations for each CC and each BWP, which are (aperiodic NZP CSI-RS) unique DL-RS, SRS without spatial relation configuration, and TCI states available for DCI triggering of aperiodic NZP CSI-RS, for indicating a spatial domain transmission filter for the SRS for PUCCH and PUSCH, is at least one. Furthermore, it has been studied to support one additional active spatial relation for the PUCCH when the maximum number of active spatial relations is 1. According to Embodiment 1, the sum of active spatial relations can be kept at 1, and the UE can operate along this UE capability information.

### (Radio Communication System)

Hereinafter, a configuration of a radio communication system according to one embodiment of the present disclosure will be described. In this radio communication system, communication is performed using one or a combination of the radio communication methods according to the embodiments of the present disclosure.

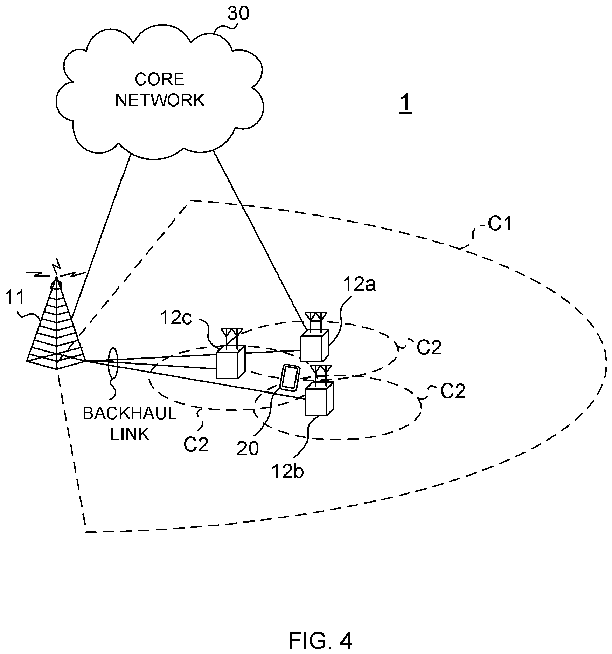

Fig. 4 is a diagram illustrating an example of a schematic configuration of a radio communication system according to one embodiment. A radio communication system 1 may be a system that implements communication using long term evolution (LTE), 5th generation mobile communication system New Radio (5G NR), and the like drafted as the specification by third generation partnership project (3GPP).

Further, the radio communication system 1 may support dual connectivity (multi-RAT dual connectivity (MR-DC)) between a plurality of radio access technologies (RATs). The MR-DC may include dual connectivity between LTE (evolved universal terrestrial radio access (E-UTRA)) and NR (E-UTRA-NR dual connectivity (EN-DC)) and dual connectivity between NR and LTE (NR-E-UTRA dual connectivity (NE-DC)).

In the EN-DC, an LTE (E-UTRA) base station (eNB) is a master node (MN), and an NR base station (gNB) is a secondary node (SN). In the NE-DC, an NR base station (gNB) is MN, and an LTE (E-UTRA) base station (eNB) is SN.

The radio communication system 1 may support dual connectivity between a plurality of base stations in the same RAT (for example, dual connectivity in which both MN and SN are NR base stations (gNB) (NR-NR dual connectivity (NN-DC)).

The radio communication system 1 may include a base station 11 that forms a macro cell C1 with a relatively wide coverage, and base stations 12 (12a to 12c) that are disposed within the macro cell C1 and that form small cells C2 narrower than the macro cell C1. User terminal 20 may be located in at least one cell. The arrangement, number, and the like of cells and the user terminal 20 are not limited to the aspects illustrated in the drawings. Hereinafter, the base stations 11 and 12 will be collectively referred to as base stations 10 unless specified otherwise.

The user terminal 20 may be connected to at least one of the plurality of base stations 10. The user terminal 20 may use at least one of carrier aggregation (CA) using a plurality of component carriers (CC) and dual connectivity (DC).

Each CC may be included in at least one of a first frequency range 1 (FR1) and a second frequency range 2 (FR2). The macro cell C1 may be included in FR1, and the small cell C2 may be included in FR2. For example, FR1 may be a frequency range of 6 GHz or less (sub-6 GHz), and FR2 may be a frequency range higher than 24 GHz (above-24 GHz). Note that the frequency ranges, definitions, and the like of FR1 and FR2 are not limited thereto, and, for example, FR1 may correspond to a frequency range higher than FR2.

Further, the user terminal 20 may perform communication in each CC using at least one of time division duplex (TDD) and frequency division duplex (FDD).

The plurality of base stations 10 may be connected by wire (for example, an optical fiber or an X2 interface in compliance with common public radio interface (CPRI)) or wirelessly (for example, NR communication). For example, when NR communication is used as a backhaul between the base stations 11 and 12, the base station 11 corresponding to a higher-level station may be referred to as an integrated access backhaul (IAB) donor, and the base station 12 corresponding to a relay station (relay) may be referred to as an IAB node.

The base station 10 may be connected to a core network 30 via another base station 10 or directly. The core network 30 may include, for example, at least one of evolved packet core (EPC), 5G core network (5GCN), next generation core (NGC), and the like.

The user terminal 20 may be a terminal corresponding to at least one of communication methods such as LTE, LTE-A, and 5G.

In the radio communication system 1, a radio access method based on orthogonal frequency division multiplexing (OFDM) may be used. For example, in at least one of downlink (DL) and uplink (UL), cyclic prefix OFDM (CP-OFDM), discrete Fourier transform spread OFDM (DFT-s-OFDM), orthogonal frequency division multiple access (OFDMA), single carrier frequency division multiple access (SC-FDMA), and the like may be used.

The radio access method may be referred to as a waveform. Note that in the radio communication system 1, another radio access method (for example, another single carrier transmission method or another multi-carrier transmission method) may be used as the UL and DL radio access method.

In the radio communication system 1, as a downlink channel, a downlink shared channel (physical downlink shared channel (PDSCH)) shared by each user terminal 20, a broadcast channel (physical broadcast channel (PBCH)), a downlink control channel (physical downlink control channel (PDCCH)), or the like may be used.

Further, in the radio communication system 1, as an uplink channel, an uplink shared channel (physical uplink shared channel (PUSCH)) shared by each user terminal 20, an uplink control channel (physical uplink control channel (PUCCH)), a random access channel (physical random access channel (PRACH)), or the like may be used.

User data, higher layer control information, and a system information block (SIB) and the like are transmitted by the PDSCH. The PUSCH may transmit user data, higher layer control information, and the like. Further, the PBCH may transmit a master information block (MIB).

The PDCCH may transmit lower layer control information. The lower layer control information may include, for example, downlink control information (DCI) including scheduling information of at least one of the PDSCH and the PUSCH.

Note that DCI that schedules the PDSCH may be referred to as DL assignment, DL DCI, or the like, and DCI that schedules the PUSCH may be referred to as UL grant, UL DCI, or the like. Note that the PDSCH may be replaced with DL data, and the PUSCH may be replaced with UL data.

A control resource set (CORESET) and a search space may be used to detect the PDCCH. The CORESET corresponds to a resource that searches for DCI. The search space corresponds to a search area and a search method for PDCCH candidates. One CORESET may be associated with one or a plurality of search spaces. The UE may monitor the CORESET associated with a certain search space based on search space configuration.

One search space may correspond to a PDCCH candidate corresponding to one or a plurality of aggregation levels. One or a plurality of search spaces may be referred to as a search space set. Note that "search space", "search space set", "search space configuration", "search space set configuration", "CORESET", "CORESET configuration", and the like in the present disclosure may be replaced with each other.

Uplink control information (UCI) including at least one of channel state information (CSI), delivery confirmation information (which may be referred to as, for example, hybrid automatic repeat request acknowledgement (HARQ-ACK), ACK/NACK, or the like), scheduling request (SR), and the like may be transmitted by the PUCCH. By means of the PRACH, a random access preamble for establishing a connection with a cell may be transmitted.

Note that in the present disclosure, downlink, uplink, and the like may be expressed without "link". Further, various channels may be expressed without adding "physical" at the beginning thereof.

In the radio communication system 1, a synchronization signal (SS), a downlink reference signal (DL-RS), and the like may be transmitted. In the radio communication systems 1, a cell-specific reference signal (CRS), a channel state information reference signal (CSI-RS), a demodulation reference signal (DMRS), a positioning reference signal (PRS), a phase tracking reference signal (PTRS), and the like may be transmitted as the DL-RS.

The synchronization signal may be, for example, at least one of a primary synchronization signal (PSS) and a secondary synchronization signal (SSS). A signal block including SS (PSS or SSS) and PBCH (and DMRS for PBCH) may be referred to as an SS/PBCH block, an SS Block (SSB), and the like. Note that the SS, the SSB, or the like may also be referred to as a reference signal.

Further, in the radio communication system 1, a measurement reference signal (sounding reference signal (SRS)), a demodulation reference signal (DMRS), and the like may be transmitted as an uplink reference signal (UL-RS). Note that, DMRS may be referred to as a user terminal-specific reference signal (UE-specific Reference Signal).

### (Base station)

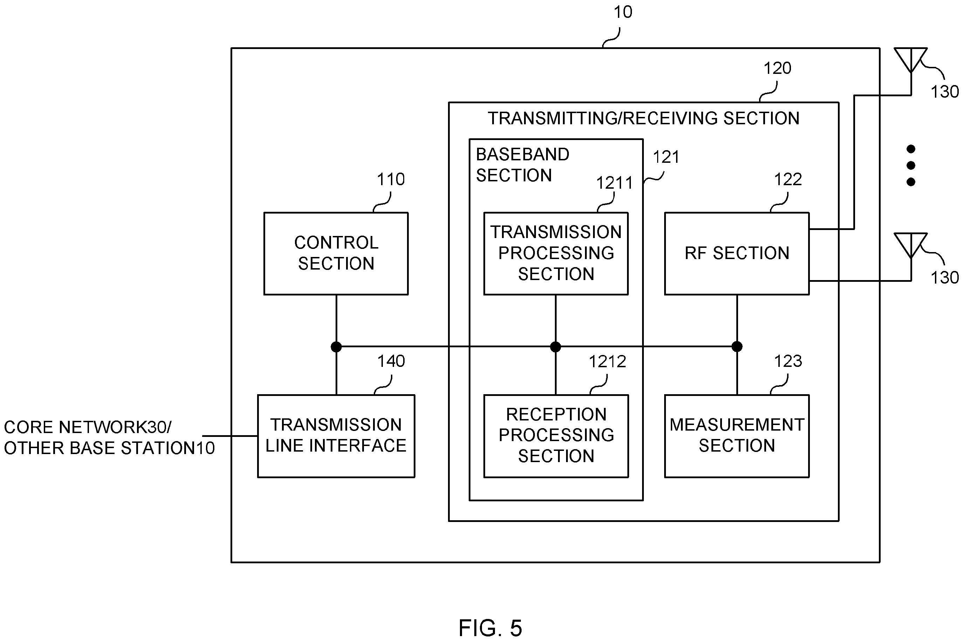

Fig. 5 is a diagram illustrating an example of a configuration of the base station according to one embodiment. The base station 10 includes a control section 110, a transmission/reception section 120, a transmission/reception antenna 130, and a transmission line interface 140. Note that one or more of the control sections 110, one or more of the transmission/reception sections 120, one or more of the transmission/reception antennas 130, and one or more of the transmission line interfaces 140 may be included.

Note that, although this example primarily indicates functional blocks of characteristic parts of the present embodiment, it may be assumed that the base station 10 has other functional blocks that are necessary for radio communication as well. A part of processing of each section described below may be omitted.

The control section 110 controls the entire base station 10. The control section 110 can be constituted by a controller, a control circuit, or the like, which is described based on common recognition in the technical field to which the present disclosure relates.

The control section 110 may control signal generation, scheduling (for example, resource allocation or mapping), and the like. The control section 110 may control transmission/reception, measurement, and the like using the transmission/reception section 120, the transmission/reception antenna 130, and the transmission line interface 140. The control section 110 may generate data to be transmitted as a signal, control information, a sequence, and the like, and may transfer the data, the control information, the sequence, and the like to the transmission/reception section 120. The control section 110 may perform call processing (such as configuration or release) of a communication channel, management of the state of the base station 10, and management of a radio resource.

The transmission/reception section 120 may include a baseband section 121, a radio frequency (RF) section 122, and a measurement section 123. The baseband section 121 may include a transmission processing section 1211 and a reception processing section 1212. The transmission/reception section 120 can be constituted by a transmitter/receiver, an RF circuit, a baseband circuit, a filter, a phase shifter, a measurement circuit, a transmission/reception circuit, or the like, which is described based on common recognition in the technical field to which the present disclosure relates.

The transmission/reception section 120 may be constituted as an integrated transmission/reception section, or may be constituted by a transmission section and a reception section. The transmission section may be constituted by the transmission processing section 1211 and the RF section 122. The reception section may be constituted by the reception processing section 1212, the RF section 122, and the measurement section 123.

The transmission/reception antenna 130 can be constituted by an antenna, which is described based on common recognition in the technical field to which the present disclosure relates, for example, an array antenna.

The transmission/reception section 120 may transmit the above-described downlink channel, synchronization signal, downlink reference signal, and the like. The transmission/reception section 120 may receive the above-described uplink channel, uplink reference signal, and the like.

The transmission/reception section 120 may form at least one of a transmission beam and a reception beam by using digital beam forming (for example, precoding), analog beam forming (for example, phase rotation), and the like.

The transmission/reception section 120 (transmission processing section 1211) may perform packet data convergence protocol (PDCP) layer processing, radio link control (RLC) layer processing (for example, RLC retransmission control), medium access control (MAC) layer processing (for example, HARQ retransmission control), and the like, for example, on data or control information acquired from the control section 110 to generate a bit string to be transmitted.

The transmission/reception section 120 (transmission processing section 1211) may perform transmission processing such as channel encoding (which may include error correcting encoding), modulation, mapping, filtering processing, discrete Fourier transform (DFT) processing (if necessary), inverse fast Fourier transform (IFFT) processing, precoding, or digital-analog transform on the bit string to be transmitted, and may output a baseband signal.

The transmission/reception section 120 (RF section 122) may perform modulation to a radio frequency band, filtering processing, amplification, and the like on the baseband signal, and may transmit a signal in the radio frequency band via the transmission/reception antenna 130.

Meanwhile, the transmission/reception section 120 (RF section 122) may perform amplification, filtering processing, demodulation to a baseband signal, and the like on the signal in the radio frequency band received by the transmission/reception antenna 130.

The transmission/reception section 120 (reception processing section 1212) may apply reception processing such as analog-digital transform, fast Fourier transform (FFT) processing, inverse discrete Fourier transform (IDFT) processing (if necessary), filtering processing, demapping, demodulation, decoding (which may include error correction decoding), MAC layer processing, RLC layer processing, or PDCP layer processing on the acquired baseband signal to acquire user data and the like.

The transmission/reception section 120 (measurement section 123) may perform measurement on the received signal. For example, the measurement section 123 may perform radio resource management (RRM) measurement, channel state information (CSI) measurement, and the like based on the received signal. The measurement section 123 may measure received power (e.g., reference signal received power (RSRP)), received quality (e.g., reference signal received quality (RSRQ), a signal to interference plus noise ratio (SINR), or a signal to noise ratio (SNR)), signal strength (e.g., received signal strength indicator (RSSI)), propagation path information (e.g., CSI), and the like. The measurement result may be output to the control section 110.

The transmission line interface 140 may transmit/receive a signal (backhaul signaling) to and from an apparatus included in the core network 30, other base stations 10, and the like, and may acquire, transmit, and the like user data (user plane data), control plane data, and the like for the user terminal 20.

Note that the transmission section and the reception section of the base station 10 in the present disclosure may be constituted by at least one of the transmission/reception section 120, the transmission/reception antenna 130, and the transmission line interface 140.

Note that the transmission/reception section 120 may transmit a reference signal (for example, SSB, CSI-RS, or the like). The transmission/reception section 120 may transmit information (MAC CE or DCI) indicating the TCI state for the specific DL channel. The TCI state may indicate at least one of a reference signal (for example, SSB, CSI-RS, or the like), a QCL type, and a cell that transmits the reference signal. The TCI state may indicate one or more reference signals. The one or more reference signals may include a reference signal of QCL type A or a reference signal of QCL type D.

The control section 110 may assume that a first reference signal of the spatial relation of the specific uplink transmission (for example, SRS, PUCCH, PUSCH, or the like) is a second reference signal (for example, SSB, CSI-RS) of QCL type D in the transmission control indication (TCI) state or the quasi-co-location (QCL) assumption of the specific downlink channel (for example, PDCCH, PDSCH, or the like).

### (User Terminal)

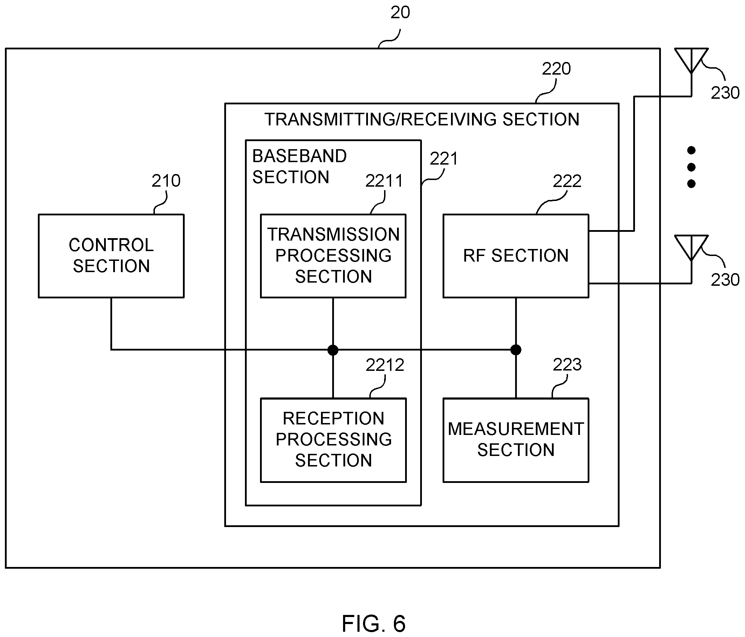

Fig. 6 is a diagram illustrating an example of a configuration of the user terminal according to one embodiment. The user terminal 20 includes a control section 210, a transmission/reception section 220, and a transmission/reception antenna 230. Note that one or more of the control sections 210, one or more of the transmission/reception sections 220, and one or more of the transmission/reception antennas 230 may be included.

Note that, although this example mainly describes functional blocks of a characteristic part of the present embodiment, it may be assumed that the user terminal 20 includes other functional blocks that are necessary for radio communication as well. A part of processing of each section described below may be omitted.

The control section 210 controls the entire user terminal 20. The control section 210 can be constituted by a controller, a control circuit, or the like, which is described based on common recognition in the technical field to which the present disclosure relates.

The control section 210 may control signal generation, mapping, and the like. The control section 210 may control transmission/reception, measurement, and the like using the transmission/reception section 220 and the transmission/reception antenna 230. The control section 210 may generate data to be transmitted as a signal, control information, a sequence, and the like, and may transfer the data, the control information, the sequence, and the like to the transmission/reception section 220.

The transmission/reception section 220 may include a baseband section 221, an RF section 222, and a measurement section 223. The baseband section 221 may include a transmission processing section 2211 and a reception processing section 2212. The transmission/reception section 220 can be constituted by a transmitter/receiver, an RF circuit, a baseband circuit, a filter, a phase shifter, a measurement circuit, a transmission/reception circuit, or the like, which is described based on common recognition in the technical field to which the present disclosure relates.

The transmission/reception section 220 may be constituted as an integrated transmission/reception section, or may be constituted by a transmission section and a reception section. The transmission section may be constituted by the transmission processing section 2211 and the RF section 222. The reception section may be constituted by the reception processing section 2212, the RF section 222, and the measurement section 223.

The transmission/reception antenna 230 can be constituted by an antenna, which is described based on common recognition in the technical field to which the present disclosure relates, for example, an array antenna.

The transmission/reception section 220 may receive the above-described downlink channel, synchronization signal, downlink reference signal, and the like. The transmission/reception section 220 may transmit the above-described uplink channel, uplink reference signal, and the like.

The transmission/reception section 220 may form at least one of a transmission beam and a reception beam by using digital beam forming (for example, precoding), analog beam forming (for example, phase rotation), and the like.

The transmission/reception section 220 (transmission processing section 2211) may perform PDCP layer processing, RLC layer processing (for example, RLC retransmission control), MAC layer processing (for example, HARQ retransmission control), and the like, for example, on data acquired from the control section 210 or control information to generate a bit string to be transmitted.

The transmission/reception section 220 (transmission processing section 2211) may perform transmission processing such as channel encoding (which may include error correcting encoding), modulation, mapping, filtering processing, DFT processing (if necessary), IFFT processing, precoding, or digital-analog transform on a bit string to be transmitted, and may output a baseband signal.

Note that whether or not to apply DFT processing may be determined based on configuration of transform precoding. When transform precoding is enabled for a channel (for example, PUSCH), the transmission/reception section 220 (transmission processing section 2211) may perform DFT processing as the transmission processing in order to transmit the channel using a DFT-s-OFDM waveform. When transform precoding is not enabled for a channel (for example, PUSCH), the transmission/reception section 220 (transmission processing section 2211) may not perform DFT processing as the transmission processing.

The transmission/reception section 220 (RF section 222) may perform modulation to a radio frequency band, filtering processing, amplification, and the like on the base band signal, and may transmit a signal in the radio frequency band via the transmission/reception antenna 230.

Meanwhile, the transmission/reception section 220 (RF section 222) may perform amplification, filtering processing, demodulation to a base band signal, and the like on the signal in the radio frequency band received by the transmission/reception antenna 230.

The transmission/reception section 220 (reception processing section 2212) may acquire user data and the like by applying reception processing such as analog-digital transform, FFT processing, IDFT processing (if necessary), filtering processing, demapping, demodulation, decoding (which may include error correction decoding), MAC layer processing, RLC layer processing, or PDCP layer processing on the acquired base band signal.

The transmission/reception section 220 (measurement section 223) may perform measurement on the received signal. For example, the measurement section 223 may perform RRM measurement, CSI measurement, and the like based on the received signal. The measurement section 223 may measure received power (e.g., RSRP), received quality (e.g., RSRQ, SINR, or SNR), signal strength (e.g., RSSI), propagation path information (e.g., CSI), and the like. The measurement result may be output to the control section 210.

Note that the transmission section and the reception section of the user terminal 20 in the present disclosure may include at least one of the transmission/reception section 220 and the transmission/reception antenna 230.

Note that the transmission/reception section 220 may receive a reference signal (for example, SSB, CSI-RS, or the like).

In addition, in a case where the spatial relation information indicating the spatial relation of the specific uplink transmission is not configured or in a case where the specific parameter is configured by the spatial relation information, the control section 210 may determine the spatial relation on the basis of whether or not a time offset between reception of a first downlink control channel (for example, PDCCH) and reception of a downlink channel (a specific downlink channel, for example, PDSCH) scheduled by the first downlink control channel is equal to or greater than the threshold. The transmission/reception section 220 may perform the specific uplink transmission using the spatial relation.

When the time offset is equal to or greater than the threshold, the control section 210 may assume that the spatial relation is the same as a transmission control indication (TCI) state or a quasi-co-location (QCL) assumption of the first downlink control channel.

When the time offset is less than the threshold, the control section 210 may assume that the spatial relation is the same as the TCI state or the QCL assumption of a second downlink control channel having a lowest control resource set ID in a specific slot and associated with a monitored control resource set.

The specific slot may be a latest slot in reception of the downlink channel or a latest slot in the specific uplink transmission.

The spatial relation may be a first reference signal, and the TCI state or the QCL assumption of the downlink control channel may be a second reference signal of QCL type D.

### (Hardware Configuration)

Note that the block diagrams that have been used to describe the above embodiments illustrate blocks in functional units. These functional blocks (configuration units) may be implemented in arbitrary combinations of at least one of hardware or software. Further, the method for implementing each functional block is not particularly limited. That is, each functional block may be implemented by a single apparatus physically or logically aggregated, or may be implemented by directly or indirectly connecting two or more physically or logically separate apparatuses (using wire, wireless, or the like, for example) and using these plural apparatuses. The functional blocks may be implemented by combining software with the above-described single apparatus or the above-described plurality of apparatuses.

Here, the function includes, but is not limited to, deciding, determining, judging, calculating, computing, processing, deriving, investigating, searching, ascertaining, receiving, transmitting, outputting, accessing, solving, selecting, choosing, establishing, comparing, assuming, expecting, considering, broadcasting, notifying, communicating, forwarding, configuring, reconfiguring, allocating, mapping, and assigning. For example, a functional block (configuration unit) that causes transmission to function may be referred to as a transmitting unit, a transmitter, and the like. In any case, as described above, the implementation method is not particularly limited.

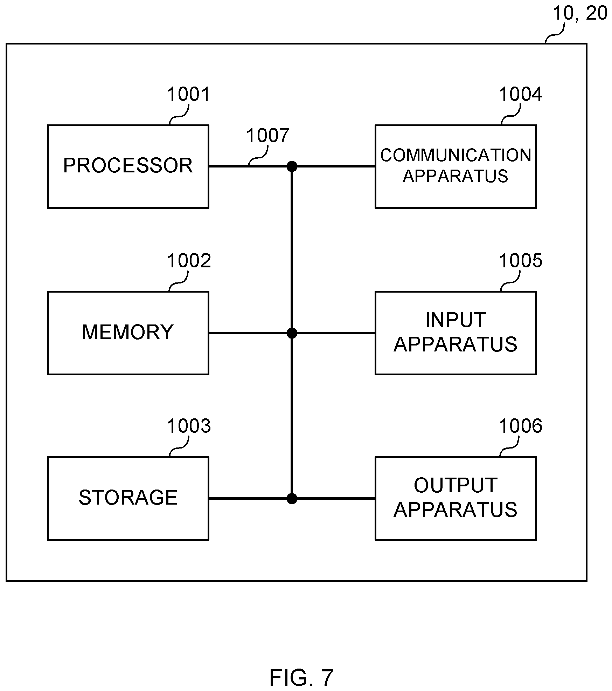

For example, the base station, the user terminal, and the like according to one embodiment of the present disclosure may function as a computer that executes the processing of the radio communication method of the present disclosure. Fig. 7 is a diagram illustrating an example of a hardware configuration of the base station and the user terminal according to one embodiment. Physically, the above-described base station 10 and user terminal 20 may be configured as a computer apparatus that includes a processor 1001, a memory 1002, a storage 1003, a communication apparatus 1004, an input apparatus 1005, an output apparatus 1006, a bus 1007, and the like.

Note that in the present disclosure, the terms such as an apparatus, a circuit, a device, a section, or a unit can be replaced with each other. The hardware configuration of the base station 10 and the user terminal 20 may be configured to include one or a plurality of apparatuses illustrated in the drawings, or may be configured without including some apparatuses.

For example, although only one processor 1001 is illustrated, a plurality of processors may be provided. Further, the processing may be executed by one processor, or the processing may be executed in sequence or using other different methods simultaneously by two or more processors. Note that the processor 1001 may be implemented with one or more chips.

Each of functions of the base station 10 and the user terminal 20 is implemented by causing given software (program) to be read on hardware such as the processor 1001 or the memory 1002, thereby causing the processor 1001 to perform operation, controlling communication via the communication apparatus 1004, and controlling at least one of reading and writing of data in the memory 1002 and the storage 1003.

The processor 1001 may control the whole computer by, for example, running an operating system. As the processor 1001, provided may be a central processing unit (CPU) including an interface with peripheral terminal, a control device, an operation device, a register, and the like. For example, at least a part of the above-described control section 110(210), transmission/reception section 120(220), and the like may be implemented by the processor 1001.

Furthermore, the processor 1001 reads programs (program codes), software modules, or data, from at least one of the storage 1003 and the communication apparatus 1004, into the memory 1002, and executes various processing according to these. As the program, a program to cause a computer to execute at least a part of the operation described in the above-described embodiment is used. For example, the control section 110(210) may be implemented by a control program that is stored in the memory 1002 and operates in the processor 1001, and another functional block may be implemented similarly.

The memory 1002 is a computer-readable recording medium, and may be constituted by, for example, at least one of a read only memory (ROM), an erasable programmable ROM (EPROM), an electrically EPROM (EEPROM ), a random access memory (RAM) and/or other appropriate storage media. The memory 1002 may be referred to as a register, a cache, a main memory (primary storage apparatus), and the like. The memory 1002 can store a program (program code), a software module, and the like, which are executable for implementing the radio communication method according to one embodiment of the present disclosure.

The storage 1003 is a computer-readable recording medium, and may be constituted by, for example, at least one of a flexible disk, a floppy (registered trademark) disk, a magneto-optical disk (for example, a compact disc ROM (CD-ROM) and the like), a digital versatile disc, a Blu-ray (registered trademark) disk), a removable disk, a hard disk drive, a smart card, a flash memory device (for example, a card, a stick, a key drive), a magnetic stripe, a database, a server, and other appropriate storage media. The storage 1003 may be referred to as an auxiliary storage apparatus.

The communication apparatus 1004 is hardware (transmitting/receiving device) for allowing inter-computer communication by using at least one of a wired network and a wireless network, and may be referred to as, for example, a network device, a network controller, a network card, a communication module, and the like. The communication apparatus 1004 may be constituted by a high frequency switch, a duplexer, a filter, a frequency synthesizer, and the like in order to implement, for example, at least one of frequency division duplex (FDD) and time division duplex (TDD). For example, the transmission/reception section 120 (220), the transmission/reception antenna 130 (230), and the like described above may be implemented by the communication apparatus 1004. The transmission/reception section 120 (220) may be implemented by physically or logically separating a transmission section 120a (220a) and a reception section 120b (220b) from each other.

The input apparatus 1005 is an input device for receiving input from the outside (for example, a keyboard, a mouse, a microphone, a switch, a button, a sensor, and the like). The output apparatus 1006 is an output device that performs output to the outside (e.g., a display, a speaker, a light emitting diode (LED) lamp, and the like). Note that the input apparatus 1005 and the output apparatus 1006 may be provided in an integrated configuration (for example, a touch panel).

Further, the apparatuses such as the processor 1001 and the memory 1002 are connected by the bus 1007 for communicating information. The bus 1007 may be configured with a single bus, or may be configured with different buses between apparatuses.

Further, the base station 10 and the user terminal 20 may include hardware such as a microprocessor, a digital signal processor (DSP), an application specific integrated circuit (ASIC), a programmable logic device (PLD), or a field programmable gate array (FPGA), and some or all of the functional blocks may be implemented by the hardware. For example, the processor 1001 may be implemented with at least one of these pieces of hardware.

### (Variations)

Note that terms described in the present disclosure and terms necessary for understanding the present disclosure may be replaced with terms that have the same or similar meanings. For example, a channel, a symbol, and a signal (signal or signaling) may be read interchangeably. Further, the signal may be a message. The reference signal can be abbreviated as an RS, and may be referred to as a pilot, a pilot signal and the like, depending on which standard applies. Furthermore, a component carrier (CC) may be referred to as a cell, a frequency carrier, a carrier frequency, and the like.

A radio frame may include one or a plurality of periods (frames) in a time domain. Each of the one or plurality of periods (frames) constituting the radio frame may be referred to as a "subframe". Furthermore, a subframe may include one or a plurality of slots in the time domain. A subframe may be a fixed time duration (for example, 1 ms) that is not dependent on numerology.

Here, numerology may be a communication parameter applied to at least one of transmission and reception of a certain signal or channel. Numerology may indicate at least one of, for example, a subcarrier spacing (SCS), a bandwidth, a symbol length, a cyclic prefix length, a transmission time interval (TTI), the number of symbols per TTI, a radio frame configuration, specific filtering processing performed by a transceiver in a frequency domain, and a specific windowing processing performed by the transceiver in a time domain.

A slot may be constituted by one or a plurality of symbols in the time domain (orthogonal frequency division multiplexing (OFDM) symbols, single carrier frequency division multiple access (SC-FDMA) symbols, and the like). Further, the slot may be a time unit based on numerology.

A slot may include a plurality of mini slots. Each mini slot may include one or a plurality of symbols in the time domain. Further, the mini slot may be referred to as a subslot. Each mini slot may include fewer symbols than a slot. A PDSCH (or PUSCH) transmitted in a time unit larger than a mini slot may be referred to as PDSCH (PUSCH) mapping type A. A PDSCH (or PUSCH) transmitted using a mini slot may be referred to as PDSCH (PUSCH) mapping type B.

A radio frame, a subframe, a slot, a mini slot and a symbol all represent the time unit in signal transmission. The radio frame, the subframe, the slot, the mini slot, and the symbol may be called by other applicable names, respectively. Note that time units such as a frame, a subframe, a slot, a mini slot, and a symbol in the present disclosure may be replaced with each other.

For example, one subframe may be referred to as TTI, a plurality of consecutive subframes may be referred to as TTI, or one slot or one mini slot may be referred to as TTI. That is, at least one of the subframe and TTI may be a subframe (1 ms) in the existing LTE, may be a period shorter than 1 ms (e.g., one to thirteen symbols), or may be a period longer than 1 ms. Note that the unit to represent the TTI may be referred to as a slot, a mini slot or the like, instead of a subframe.

Here, the TTI refers to, for example, the minimum time unit of scheduling in radio communication. For example, in the LTE system, a base station performs scheduling to allocate radio resources (a frequency bandwidth and transmission power that can be used in each user terminal and the like) to each user terminal in TTI units. Note that the definition of TTI is not limited thereto.

The TTI may be the transmission time unit of channel-encoded data packets (transport blocks), code blocks, codewords, or the like, or may be the unit of processing in scheduling, link adaptation, or the like. Note that, when the TTI is given, a time interval (for example, the number of symbols) to which the transport block, code block, codeword, or the like is actually mapped may be shorter than the TTI.

Note that, when one slot or one mini slot is referred to as a TTI, one or more TTIs (that is, one or more slots or one or more mini slots) may be the minimum time unit of scheduling. Further, the number of slots (the number of mini slots) constituting the minimum time unit of scheduling may be controlled.

A TTI having a time length of 1 ms may be referred to as a usual TTI (TTI in 3GPP Rel. 8 to 12), a normal TTI, a long TTI, a usual subframe, a normal subframe, a long subframe, a slot, and the like. A TTI that is shorter than the usual TTI may be referred to as a shortened TTI, a short TTI, a partial TTI (or fractional TTI), a shortened subframe, a short subframe, a mini slot, a subslot, a slot, and the like.

Note that a long TTI (for example, a usual TTI, a subframe, or the like) may be replaced with a TTI having a time length exceeding 1 ms, and a short TTI (for example, a shortened TTI) may be replaced with a TTI having a TTI duration less than the TTI duration of a long TTI and not less than 1 ms.

A resource block (RB) is the unit of resource allocation in the time domain and the frequency domain, and may include one or a plurality of consecutive subcarriers in the frequency domain. The number of subcarriers included in the RB may be the same regardless of the numerology, and may be twelve, for example. The number of subcarriers included in the RB may be determined based on the numerology.

Further, the RB may include one or a plurality of symbols in the time domain, and may have a length of one slot, one mini slot, one subframe, or one TTI. One TTI, one subframe, and the like each may be constituted by one or a plurality of resource blocks.

Note that one or a plurality of RBs may be referred to as a physical resource block (PRB (Physical RB)), a subcarrier group (SCG (Sub-Carrier Group)), a resource element group (REG), a PRB pair, an RB pair, or the like.

Furthermore, a resource block may be constituted by one or a plurality of resource elements (REs). For example, one RE may be a radio resource area of one subcarrier and one symbol.

A bandwidth part (BWP) (which may be referred to as a partial bandwidth or the like) may represent a subset of consecutive common resource blocks (RBs) for a certain numerology in a certain carrier. Here, the common RB may be specified by the index of the RB based on a common reference point of the carrier. The PRB may be defined in a certain BWP and be numbered within the BWP.

The BWP may include BWP for UL (UL BWP) and BWP for DL (DL BWP). For the UE, one or a plurality of BWPs may be configured within one carrier.

At least one of the configured BWPs may be active, and it may not be assumed that the UE transmits and receives a given signal/channel outside the active BWP. Note that a "cell", a "carrier", or the like in the present disclosure may be replaced with the "BWP".

Note that the structures of radio frames, subframes, slots, mini slots, symbols and the like described above are merely examples. For example, configurations such as the number of subframes included in a radio frame, the number of slots per subframe or radio frame, the number of mini slots included in a slot, the number of symbols and RBs included in a slot or a mini slot, the number of subcarriers included in an RB, the number of symbols in a TTI, the symbol duration, the length of cyclic prefix (CP), and the like can be variously changed.

Further, the information, parameters, and the like described in the present disclosure may be represented using absolute values or relative values with respect to given values, or may be represented using other corresponding information. For example, a radio resource may be instructed by a given index.

The names used for parameters and the like in the present disclosure are in no respect limiting. Furthermore, any mathematical expression or the like that uses these parameters may differ from those explicitly disclosed in the present disclosure. Since various channels (PUCCH, PDCCH, and the like) and information elements can be identified by any suitable names, various names assigned to these various channels and information elements are not restrictive names in any respect.

The information, signals, and the like described in the present disclosure may be represented by using any of a variety of different technologies. For example, data, instructions, commands, information, signals, bits, symbols, chips, and the like all of which may be referenced throughout the above-described description, may be represented by voltages, currents, electromagnetic waves, magnetic fields or particles, optical fields or photons, or any combination of these.

Further, information, signals, and the like can be output in at least one of a direction from higher layers to lower layers and a direction from lower layers to higher layers. Information, a signal, and the like may be input/output via a plurality of network nodes.

The information, signals, and the like that are input and output may be stored in a specific location (for example, in a memory), or may be managed using a management table. The information, signal, and the like to be input and/or output can be overwritten, updated or appended. The output information, signal, and the like may be deleted. The information, signals, and the like that are input may be transmitted to another apparatus.

Notification of information may be performed not only by using the aspects/embodiments described in the present disclosure but also using another method. For example, notification of information in the present disclosure may be performed by using physical layer signaling (for example, downlink control information (DCI), uplink control information (UCI)), higher layer signaling (for example, radio resource control (RRC) signaling, broadcast information (master information block (MIB), system information block (SIB), or the like), medium access control (MAC) signaling), another signal, or a combination thereof.

Note that physical layer signaling may be referred to as Layer 1/Layer 2 (L1/L2) control information (L1/L2 control signals), L1 control information (L1 control signal), or the like. Further, the RRC signaling may be referred to as an RRC message, and may be, for example, an RRC connection setup message, an RRC connection reconfiguration message, and the like. Further, a notification of MAC signaling may be given using, for example, MAC control elements (MAC control elements (CEs)).

Further, a notification of given information (for example, notification of "being X") is not limited to explicit notification but may be performed implicitly (for example, by not performing notification of the given information or by performing notification of another piece of information).

Decisions may be made in values represented by one bit (0 or 1), may be made in Boolean values that represent true or false, or may be made by comparing numerical values (for example, comparison against a given value).

Regardless of whether software is referred to as software, firmware, middleware, microcode, or hardware description language, or referred to by other names, this should be interpreted broadly, to mean an instruction, an instruction set, a code, a code segment, a program code, a program, a subprogram, a software module, an application, a software application, a software package, a routine, a subroutine, an object, an executable file, an execution thread, a procedure, a function, and the like.

Further, software, instruction, information, and the like may be transmitted/received via a transmission medium. For example, when software is transmitted from a website, a server, or another remote source by using at least one of a wired technology (coaxial cable, optical fiber cable, twisted pair, digital subscriber line (DSL), or the like) and a wireless technology (infrared rays, microwaves, and the like), at least one of the wired technology and the wireless technology is included within the definition of a transmission medium.

The terms "system" and "network" used in the present disclosure can be used interchangeably. The "network" may mean an apparatus (for example, a base station) included in the network.

In the present disclosure, terms such as "precoding", "precoder", "weight (precoding weight)", "quasi-co-location (QCL)", "transmission configuration indication state (TCI state)", "spatial relation", "spatial domain filter", "transmission power", "phase rotation", "antenna port", "antenna port group", "layer", "number of layers", "rank", "resource", "resource set", "resource group", "beam", "beam width", "beam angle", "antenna", "antenna element", and "panel" can be interchangeably used.

In the present disclosure, the terms such as "base station (BS)", "radio base station", "fixed station", "NodeB", "eNodeB (eNB)", "gNodeB (gNB)", "access point", "transmission point (TP)", "reception point (RP)", "transmission/reception point (TRP)", "panel", "cell", "sector", "cell group", "carrier", and "component carrier", can be used interchangeably. The base station may be referred to as a term such as a macro cell, a small cell, a femto cell, or a pico cell.

The base station can accommodate one or a plurality of (for example, three) cells. When a base station accommodates a plurality of cells, the entire coverage area of the base station can be partitioned into a plurality of smaller areas, and each smaller area can provide communication service through base station subsystems (e.g., indoor small base stations (remote radio heads (RRHs))). The term "cell" or "sector" refers to a part or the whole of a coverage area of at least one of a base station and a base station subsystem that perform a communication service in this coverage.

In the present disclosure, the terms such as "mobile station (MS)", "user terminal", "user equipment (UE)", and "terminal" can be used interchangeably.

The mobile station may be referred to as a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client, or other appropriate terms.

At least one of the base station and the mobile station may be referred to as a transmitting apparatus, a receiving apparatus, a radio communication apparatus, and the like. Note that at least one of the base station and the mobile station may be a device mounted on a moving body, a moving body itself, and the like. The moving body may be a transportation (for example, a car, an airplane and the like), an unmanned moving body (for example, a drone, an autonomous car, and the like), or a (manned or unmanned) robot. Note that at least one of the base station and the mobile station also includes a device that does not necessarily move during a communication operation. For example, at least one of the base station and the mobile station may be an Internet of Things (IoT) device such as a sensor.

Further, the base station in the present disclosure may be replaced with the user terminal. For example, each aspect/embodiment of the present disclosure may be applied to a configuration in which communication between the base station and the user terminal is replaced with communication among a plurality of pieces of user terminal (which may be referred to as, for example, device-to-device (D2D), vehicle-to-everything (V2X), and the like). In the case, the user terminal 20 may have the function of the above-mentioned base station 10. In addition, terms such as "uplink" and "downlink" may be replaced with terms corresponding to communication between terminals (for example, "side"). For example, the uplink channel, the downlink channel, and the like may be replaced with a side channel.

Similarly, the user terminal in the present disclosure may be replaced with a base station. In this case, the base station 10 may be configured to have the above-described functions of the user terminal 20.

In the present disclosure, the operation performed by the base station may be performed by an upper node thereof in some cases. In a network including one or a plurality of network nodes with base stations, it is clear that various operations performed for communication with a terminal can be performed by a base station, one or a plurality of network nodes (examples of which include but are not limited to mobility management entity (MME) and serving-gateway (S-GW)) other than the base station), or a combination thereof.

Each aspect/embodiment described in the present disclosure may be used alone, used in combination, or switched in association with execution. Further, the order of processing procedures, sequences, flowcharts, and the like of the aspects/embodiments described in the present disclosure may be re-ordered as long as there is no inconsistency. For example, regarding the methods described in the present disclosure, elements of various steps are presented using an illustrative order, and are not limited to the presented specific order.

Each aspect/embodiment described in the present disclosure may be applied to a system using long term evolution (LTE), LTE-advanced (LTE-A), LTE-beyond (LTE-B), SUPER 3G, IMT-Advanced, 4th generation mobile communication system (4G), 5th generation mobile communication system (5G), future radio access (FRA), new radio access technology (RAT), new radio (NR), new radio access (NX), future generation radio access (FX), global system for mobile communications (GSM (registered trademark)), CDMA 2000, ultra mobile broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), or another appropriate radio communication method, a next generation system expanded based on these, and the like. Further, a plurality of systems may be combined (for example, a combination of LTE or LTE-A and 5G) and applied.

The phrase "on the basis of" as used in the present disclosure does not mean "on the basis of only", unless otherwise specified. In other words, the phrase "based on" means both "based only on" and "based at least on".

Any reference to an element using designations such as "first" and "second" used in the present disclosure does not generally limit the amount or order of these elements. These designations may be used in the present disclosure only for convenience, as a method for distinguishing between two or more elements. Therefore, reference to the first and second elements does not mean that only two elements are adoptable, or that the first element must precede the second element in some way.

The term "determining" used in the present disclosure may include a wide variety of operations. For example, "determining" may be regarded as "determining" of judging, calculating, computing, processing, deriving, investigating, looking up, search, inquiry (for example, looking up in a table, database, or another data structure), ascertaining, and the like.

Furthermore, "determining" may be regarded as "determining" of receiving (for example, receiving of information), transmitting (for example, transmitting of information), input, output, accessing (for example, accessing to data in a memory), and the like.

Further, "determining" may be regarded as "determining" of resolving, selecting, choosing, establishing, comparing, and the like. In other words, "determining" may be regarded as "determining" of a certain operation.

Further, "determining" may be replaced with "assuming", "expecting", "considering", and the like.

As used in the present disclosure, the terms "connected" and "coupled", or any variation of these terms mean all direct or indirect connections or coupling between two or more elements, and may include the presence of one or more intermediate elements between two elements that are "connected" or "coupled" to each other. The coupling or connection between the elements may be physical, logical or a combination of these. For example, "connection" may be replaced with "access".

As used in the present disclosure, when two elements are connected, these elements may be considered "connected" or "coupled" to each other by using one or more electrical wires, cables, printed electrical connections, and the like, and, as a number of non-limiting and non-inclusive examples, by using electromagnetic energy having wavelengths in the radio frequency, microwave, and optical (both visible and invisible) regions, or the like.

In the present disclosure, the phrase "A and B are different" may mean "A and B are different from each other". Note that the phrase may mean that "A and B are different from C". The terms such as "leave", "coupled", and the like may be interpreted as "different".

When the terms such as "include", "including", and variations of these are used in the present disclosure, these terms are intended to be inclusive, in a manner similar to the way the term "comprising" is used. Furthermore, the term "or" as used in the present disclosure is intended to be not an exclusive-OR.

In the present disclosure, for example, when translations add articles, such as a, an, and the in English, the present disclosure may include that the noun that follows these articles is in the plural.

Now, although the invention according to the present disclosure has been described in detail above, it is obvious to a person skilled in the art that the invention according to the present disclosure is by no means limited to the embodiments described in the present disclosure. The invention according to the present disclosure can be embodied with various corrections and in various modified aspects, without departing from the spirit and scope of the invention defined on the basis of the description of claims. Consequently, the description of the present disclosure is provided for the purpose of exemplification and explanation, and has no limitative meaning to the invention according to the present disclosure.

This application is based on Japanese Patent Application No. 2019-087882 filed on April 11, 2019. The contents of this are all incorporated herein.

## Claims

1. A user terminal comprising:
a control section configured to determine a spatial relation, in a case where spatial relation information indicating the spatial relation of specific uplink transmission is not configured or in a case where a specific parameter is configured by the spatial relation information, on a basis of whether or not a time offset between reception of a first downlink control channel and reception of a downlink channel scheduled by the first downlink control channel is equal to or greater than a threshold; and
a transmission section configured to perform the specific uplink transmission using the spatial relation.

2. The user terminal according to claim 1, wherein when the time offset is equal to or greater than the threshold, the control section assumes that the spatial relation is same as a transmission control indication (TCI) state or a quasi-co-location (QCL) assumption of the first downlink control channel.

3. The user terminal according to claim 1 or 2, wherein when the time offset is less than the threshold, the control section assumes that the spatial relation is same as a TCI state or a QCL assumption of a second downlink control channel having a lowest control resource set ID in a specific slot and associated with a monitored control resource set.

4. The user terminal according to claim 3, wherein the specific slot is a latest slot in reception of the downlink channel or a latest slot in the specific uplink transmission.

5. The user terminal according to any of claims 1 to 4, wherein the spatial relation is a first reference signal, and a TCI state or a QCL assumption of a downlink control channel is a second reference signal of QCL type D.

6. A radio communication method of user terminal, the method comprising:
a step of determining a spatial relation, in a case where spatial relation information indicating the spatial relation of specific uplink transmission is not configured or in a case where a specific parameter is configured by the spatial relation information, on a basis of whether or not a time offset between reception of a first downlink control channel and reception of a downlink channel scheduled by the first downlink control channel is equal to or greater than a threshold; and
a step of performing the specific uplink transmission using the spatial relation.
